(19) 

Europäisches
Patentamt
European
Patent Office
Office européen
des brevets

(11) **EP 4 663 689 A1**

(12) **EUROPEAN PATENT APPLICATION**
published in accordance with Art. 153(4) EPC

(43) Date of publication:
**17.12.2025 Bulletin 2025/51**

(21) Application number: **24753142.9**

(22) Date of filing: **25.01.2024**

(51) International Patent Classification (IPC):
**C08J 5/04** (2006.01)

(52) Cooperative Patent Classification (CPC):
**C08J 5/04**

(86) International application number:
**PCT/JP2024/002229**

(87) International publication number:
**WO 2024/166698 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.02.2023 JP 2023018420
09.02.2023 JP 2023018421
09.02.2023 JP 2023018422**

(71) Applicant: **Toray Industries, Inc.
Tokyo 103-8666 (JP)**

(72) Inventors:
• **KONISHI Daisuke
Nagoya-shi, Aichi 455-8502 (JP)**
• **HIKOSAKA Yuki
Nagoya-shi, Aichi 455-8502 (JP)**
• **MUTO Shohei
Nagoya-shi, Aichi 455-8502 (JP)**
• **ODANI Hiroshi
Nagoya-shi, Aichi 455-8502 (JP)**
• **HIRANO Noriyuki
Nagoya-shi, Aichi 455-8502 (JP)**

(74) Representative: **Hoefer & Partner Patentanwälte
mbB
Pilgersheimer Straße 20
81543 München (DE)**

(54) **MOLDING MATERIAL FOR FIBER-REINFORCED COMPOSITE MATERIAL, AND
FIBER-REINFORCED COMPOSITE MATERIAL**

(57)     In a molding material for a fiber-reinforced composite material according to the present invention, a layered body is formed by a plurality of layers of constituent elements [A] each comprising a reinforcing fiber base material and a constituent element [B] comprising a non-woven fabric incorporated between arbitrary layers among the plurality of layers of constituent elements [A], an epoxy resin composition comprising a constituent element [C] which is an epoxy resin main ingredient and a constituent element [D] which is an amine compound is impregnated into the layered body, and the molding material satisfies the following requirements 1 and 2 at the same time: requirement 1: the constituent element [B] comprises an amorphous resin material; and requirement 2: the time $Cd_{20}(180°C)$ in which the degree of cure of the epoxy resin composition comprising the constituent elements [C] and [D] reaches 20% at 180°C is 15 minutes to 45 minutes. A fiber-reinforced composite material can be obtained, which is excellent in compressive strength under wet heat environments, impact resistance such as compressive strength after impact, and durability including suppression of occurrence of microcracks after cold-hot cycles.

EP 4 663 689 A1

**Description**

Technical Field of the Invention

The present invention relates to a molding material for a fiber-reinforced composite material used in aerospace and general industrial applications, and to a fiber-reinforced composite material produced using the same.

Background Art of the Invention

Since fiber-reinforced composite materials (FRP) have excellent weight-reducing potential, they are widely used in aircraft, sports cars, etc. In particular, for structural materials which bear loads, prepregs, which are intermediate substrates made by impregnating aligned reinforcing fibers with a matrix resin, have been widely used, but in recent years, due to the demand for high productivity, the application of injection molding methods such as resin infusion (RI) methods such as RTM (Resin Transfer Molding) and VaRI (Vacuum assisted Resin Infusion) has been expanded. On the other hand, molded articles made by the RI method, especially when used for structural materials for aircraft, may have problems with impact resistance, compressive strength, and durability during long-term use, and there is a problem that the weight-reducing effect is limited as compared with prepregs. In response to this, a design is made in which a thermoplastic resin material is placed between the substrates to increase impact resistance, but in this case, mechanical properties such as compressive properties under wet heat conditions and durability due to the occurrence of microcracks when subjected to a cold-hot cycle are reduced.

Patent documents 1, 2 and 3 disclose reinforcing fiber base materials that maintain excellent productivity and improve handling properties and mechanical properties by disposing a specific thermoplastic resin material in reinforcing fibers.

Patent document 4 describes a method of enhancing the impact resistance and durability against cold-hot cycles by arranging a crystalline thermoplastic resin in the reinforcing fibers to increase the affinity with matrix resin.

Patent document 5 discloses a method for reducing weak points in FRP and improving compression properties by not using stitch threads to bind reinforcing fibers.

Prior art documents

Patent documents

Patent document 1: WO 2022/149591
Patent document 2: JP-A-2020-23182
Patent document 3: JP-A-2003-80607
Patent document 4: JP-A-2019-99987
Patent document 5: WO 2010/046609

Summary of the Invention

Problems to be solved by the Invention

The fiber-reinforced composite materials made of the reinforcing fiber base materials described in Patent documents 1 and 2 have excellent compressive properties under wet heat conditions, but were insufficient in strength of compression after impact (CAI). In addition, there is no mention with respect to resistance against cold-hot cycles.

The reinforcing fiber layered body described in Patent document 3 has excellent impregnation properties and compression properties in resin injection molding, but has low CAI strength and cold-hot cycle resistance.

The fiber-reinforced composite material made of a crystalline resin material and reinforcing fibers, described in Patent document 4, has excellent CAI strength, but has low wet heat compressive strength because the crystalline resin material melts at the molding temperature.

The fiber-reinforced composite material made using the carbon fiber-reinforced base material described in Patent document 5 has excellent CAI strength, but was insufficient in compressive properties under wet heat conditions.

The present invention solves such defects in the conventional technologies, and has an object to provide a fiber-reinforced composite material which can simultaneously satisfy mechanical properties, particularly excellent compressive properties under wet heat conditions, impact resistance, and durability in cold-hot cycles, which have been difficult to achieve, while maintaining excellent productivity, and a molding material for a fiber-reinforced composite material which can provide such properties.

Means for solving the Problems

As a result of earnest study aimed at solving the above-described problems, the present inventors have found a molding material for a fiber-reinforced composite material having the following configurations, and have completed the present invention. Namely, the molding material for a fiber-reinforced composite material according to the present invention is a molding material for a fiber-reinforced composite material, wherein an epoxy resin composition comprising a constituent element [C] and a constituent element [D] is impregnated into a layered body incorporated with a constituent element [B] between arbitrary layers among a plurality of layers of constituent elements [A], and the molding material satisfies the following requirements 1 and 2 at the same time:
[A]: reinforcing fiber base material; [B]: non-woven fabric; [C]: epoxy resin main ingredient; and [D]: amine compound.

requirement 1: the constituent element [B] comprises an amorphous resin material; and
requirement 2: a time $Cd_{20}(180°C)$ in which the degree of cure of the epoxy resin composition comprising the constituent elements [C] and [D] reaches 20% at 180°C is 15 minutes to 45 minutes.

In the molding material for a fiber-reinforced composite material according to the present invention, it is preferred that at least one of the following requirements 3, 4 and 5 is further satisfied.

Requirement 3: (i) a ratio of a fiber diameter of the constituent element [B] in a resin-cured plate obtained by impregnating the constituent element [B] with the epoxy resin composition and heat-curing it at 190°C to a fiber diameter before the heat-curing is referred to as Rexp(190°C), and (ii) a ratio of a fiber diameter of the constituent element [B] in a resin-cured plate obtained by impregnating the constituent element [B] into the epoxy resin composition and heat-curing it at 170°C to a fiber diameter before the heat-curing is referred to as Rexp(170°C), and Rexp(190°C) and Rexp(170°C) satisfy the following equation (1):

$$0.5<(Rexp(190°C)\text{-}Rexp(170°C))×5<5.0 \cdots (1)$$

Requirement 4: (i) a tensile modulus B82 (humidity controlled at 82°C) and a tensile modulus B25 (humidity controlled at 25°C) of the constituent element [B], and (ii) a tensile modulus E82 (humidity controlled at 82°C) and a tensile modulus E25 (25°C, 50% RH) of an epoxy resin cured plate obtained by heat curing the epoxy resin composition comprising the constituent elements [C] and [D] at 180°C satisfy the following equation (2):

$$0.7< R_{ret} = (B82/B25)/(E82/E25)<1.2 \cdots (2)$$

Requirement 5: when the layered body is compressed in an out-of-plane direction, a compressive stress at 160°C ($\sigma160$: MPa) and a compressive stress at 190°C ($\sigma190$: MPa) satisfy the following equation (3):

$$0.5<(\sigma190/\sigma160)<1.0 \cdots (3)$$

Further, the present invention also includes a fiber-reinforced composite material obtained by heat curing the above-described molding material for a fiber-reinforced composite material.

Effect according to the Invention

According to the present invention, a fiber-reinforced composite material excellent in compressive strength under wet heat environments, impact resistance such as CAI (compressive strength after impact), and durability including suppression of occurrence of microcracks after cold-hot cycles, can be obtained. Further, the molding material for a fiber-reinforced composite material of the present invention can be suitably used for producing a fiber-reinforced composite material by injection molding.

Embodiments for carrying out the Invention

Hereinafter, the present invention will be explained in detail together with embodiments.
The molding material for a fiber-reinforced composite material of the present invention contains the following essential components: [A] a reinforcing fiber base material, [B] a non-woven fabric, [C] an epoxy resin main ingredient, and [D] an amine compound. First, the constituent elements [A] and [B] will be explained in detail.

(Constituent element [A])

The constituent element [A] of the present invention is a reinforcing fiber base material. The reinforcing fibers used in the reinforcing fiber base material are not particularly limited, and glass fibers, carbon fibers, aramid fibers, boron fibers, alumina fibers, silicon carbide fibers, etc. can be used. These fibers may be used by mixing two or more kinds. From the viewpoint of capable of obtaining a lightweight and highly rigid fiber-reinforced composite material, it is preferred to use carbon fibers.

The form of the reinforcing fiber base material of the present invention is not particularly limited as long as it is a sheet-like arrangement of multifilament yarns made of the above-described reinforcing fibers (fiber aggregate). As such form of the reinforcing fiber base material, exemplified are woven fabrics (unidirectional, bidirectional, multiaxial), knitted fabrics, braided fabrics, sheets arranged in one direction (unidirectional sheets), multiaxial sheets obtained by stacking two or more layers of unidirectional sheets, and the like. As the form of the constituent element [A], it is preferred to use unidirectional sheets and multiaxial sheets because the fiber-reinforced composite material has excellent compressive strength.

Here, the above-described reinforcing fiber base material may be one formed by integrating a plurality of base materials together by various joining means such as stitch threads, knot threads, binders, etc.

The weight per one layer of the reinforcing fiber base material (areal weight) of the present invention is preferably 50 to 800 g/m$^2$, more preferably 100 to 400 g/m$^2$, and particularly preferably 150 to 350 g/m$^2$. By setting the areal weight within such a range, a good balance is achieved between the workability when shaping the fiber reinforced base material and the impregnability of the epoxy resin composition.

(Constituent element [B])

The constituent element [B] (non-woven fabric) of the present invention must be composed of an amorphous resin material. In general, by placing a non-woven fabric in a layered body (hereinafter, interlayer) of reinforcing fiber base materials, the propagation of cracks occurring in the resin layer present between the layers can be suppressed, and the compression after impact (CAI) strength can be increased. By using an amorphous material for the non-woven fabric and a specific epoxy resin composition for the matrix, excellent CAI strength and compressive strength under wet heat condition are exhibited, and a fiber-reinforced composite material excellent in durability can be obtained. In addition, deformation of the interlayer non-woven fabric during the resin injection process can be suppressed, and stable mechanical properties can be exhibited.

Here, the term "amorphous" in the present invention indicates one having an enthalpy of fusion less than 5 J/g, which is determined by differential scanning calorimetry according to JIS K7121 (1987) at a temperature elevation rate of 10 °C/min.

As such an amorphous resin material constituting the constituent element [B], amorphous polyamide can be suitably used because it has an excellent balance between heat resistance and durability.

As such amorphous polyamides, polyamides 4I, 6I, 9I, and 12I, "Grilamide" TR90, TR55, TR30, and XE4003 (all supplied by EMS-CHEMIE Japan KK), and the like, can be used.

The amorphous resin material used for the constituent element [B] of the present invention preferably has a load deflection temperature in a range of 100°C to 160°C. When it is in this range, a fiber-reinforced composite material using a non-woven fabric (constituent element [B]) comprising the amorphous resin material has an excellent balance between compressive strength under wet heat conditions and impact resistance.

Further, the load deflection temperature in the present invention can be determined, for example, by a three-point bending test method in accordance with Method A described in JIS 7191-2 (2015).

Furthermore, in the constituent element [B] of the present invention, it is preferred that the retention rate B82/B25 of the tensile modulus B82 at 82°C to the tensile modulus B25 at 25°C during humidity conditioning is in a range of 0.5 to 1.0. By being in this range, a fiber-reinforced composite material using a non-woven fabric (constituent element [B]) comprising this amorphous resin material does not become brittle, particularly under wet heat conditions, and can exhibit excellent compressive strength.

Here, the tensile modulus in the present invention can be measured, for example, by carrying out a tensile test according to JIS K7161 (1994) with respect to a resin plate processed with the constituent element [B] into a dumbbell shape.

Here, when the weight per area (g/m$^2$) of the constituent element [B], i.e., the areal weight, is referred to as Wb and the number average fiber diameter ($\mu$m) thereof is referred to as Df , it is preferred that the value obtained by dividing Wb by Df (Wb/Df) is in a range of 0.15 to 0.60. When the value is in such a range, the impregnation time can be shortened without impairing the CAI strength of the fiber-reinforced composite material, and the surface quality of the fiber-reinforced composite material is improved.

Here, the number average fiber diameter of the constituent element [B] can be obtained, for example, by taking a microphotograph of the surface or cross section of the non-woven fabric, measuring the fiber diameters of the fibers present in the image, and calculating the average value thereof. The above-described fiber diameter refers to the diameter of the fiber when the cross section of the fiber is a perfect circle, and when the fiber is not a perfect circle, it refers to the longest diameter of the fiber when a cross section perpendicular to the axial direction is taken.

Where, the fibers constituting the non-woven fabric of the present invention may be in the form of long fibers or short fibers, and may be produced by known methods such as melt blowing, spun bonding, air laid, carding, and papermaking.

The fiber diameter of the fibers constituting the non-woven fabric is not particularly limited, but it is preferably 1 μm or more and 100 μm or less, more preferably 10 μm or more and 50 μm or less. When the fiber diameter is in such a range, the fiber-reinforced composite material has an excellent balance between compressive strength under wet heat conditions and CAI strength.

The layered body according to the present invention is one in which the constituent element [B] is incorporated between arbitrary layers among a plurality of layers of the constituent elements [A]. Here, the layered body may contain elements other than the constituent elements [A] and the constituent elements [B], and for example, it may be bonded between layers with a stitch thread or a tackifier. Such a bonded embodiment may be called a preform.

Next, the constituent elements [C] and [D] will be explained.

(Constituent element [C])

The constituent element [C] in the present invention is an epoxy resin main ingredient. [C] the epoxy resin main ingredient is not particularly limited, but for example, exemplified are bisphenol A type epoxy resin, bisphenol F type epoxy resin, biphenyl type epoxy resin, naphthalene type epoxy resin, novolac type epoxy resin, dicyclopentadiene type epoxy resin, tetraglycidyl diamino diphenyl methane, triglycidyl aminophenol, glycidyl aniline, etc. These epoxy resins may be used alone or in combination.

As commercially available products of the constituent element [C], exemplified are "jER (registered trademark)" 154, 828 (all supplied by Mitsubishi Chemical Corporation), "Epiclon (registered trademark)" Epc 830, N-740, HP7200L, HP7200H (all supplied by DIC Corporation), "Sumiepoxy (registered trademark)" ELM434, ELM434VL (all supplied by Sumitomo Chemical Co., Ltd.), "Araldite (registered trademark)" MY721, MY0510, MY0600 (all supplied by Huntsman Advanced Materials), GAN , GPT (all supplied by Nippon Kayaku Co., Ltd.), "TOREP (registered trademark)" A-204E (supplied by Toray Fine Chemicals Co., Ltd.), etc.

(Constituent element [D])

The amine compound of the constituent element [D] of the present invention is a compound capable of curing the epoxy resin main ingredient of the constituent element [C], that is, a curing agent. For example, exemplified are dicyandiamide, aromatic amine, aliphatic amine, and the like. Among them, aromatic amine compounds are preferably used because the resulting fiber-reinforced composite material has excellent heat resistance and mechanical properties.

Aromatic amines are compounds in which an amino group is directly added to an aromatic ring. As the aromatic amines, for example, exemplified are 4,4'-methylenebis(2-isopropyl-6-methylaniline) (M-MIPA), 4,4'-methylenebis(2,6-diethylaniline) (M-DEA), methylenebis(3-chloro-2,6-diethylaniline) (M-CDEA), 4,4'-methylenebis(2,6-bis(1-methylethyl) benzenamine) (M-DIPA), 4,4'-diamino-3,3'-dimethyldiphenylmethane (M-MEA), dimethylthiotoluenediamine (DMTDA), diethyltoluenediamine (DETDA), and the like.

As commercially available products of the aromatic amine, exemplified are "Lonzacure (registered trademark)" M-MIPA, "Lonzacure (registered trademark)" M-DEA, "Lonzacure (registered trademark)" M-CDEA, "Lonzacure (registered trademark)" M-DIPA (all supplied by Lonza Corporation), "KAYAHARD (registered trademark)" A-A (supplied by Nippon Kayaku Co., Ltd.), "Ethacure (registered trademark)" 300 (supplied by Albemarle Corporation), "jER Cure (registered trademark)" WA (supplied by Mitsubishi Chemical Corporation) , and the like.

The constituent elements [C] and [D] are mixed together and used as an epoxy resin composition. In addition, it is important that the time required for the degree of cure to reach 20% when the epoxy resin composition is held at 180°C ($Cd_{20}$ (180°C)) is in a range of 15 to 45 minutes.

In the molding material for a fiber-reinforced composite material of the present invention, by satisfying (requirement 1) that the constituent element [B] comprises an amorphous resin material and (requirement 2) that a time $Cd_{20}$(180°C) in which the degree of cure of the epoxy resin composition comprising the constituent elements [C] and [D] reaches 20% at 180°C is 15 minutes to 45 minutes, at the same time, it becomes possible to provide the fiber-reinforced composite material with crack resistance against cold-hot cycles while achieving both the CAI strength and the compressive strength under wet heat conditions, which are usually in a trade-off relationship.

The molding material for a fiber-reinforced composite material of the present invention is obtained by impregnating the epoxy resin composition comprising the constituent element [C] and the constituent element [D] into a layered body incorporated with the constituent element [B] between arbitrary layers among a plurality of layers of the constituent elements [A]. Where, the non-woven fabric of the constituent element [B] used in the present invention may be in contact with the above-described constituent element [A] and may be present on at least one surface of the constituent element [A].

Furthermore, in the present invention , as the requirement 3, it is preferred that (i) a ratio of a fiber diameter of the constituent element [B] in a resin-cured plate obtained by impregnating the constituent element [B] with the epoxy resin composition and heat-curing it at 190°C to a fiber diameter before the heat-curing is referred to as Rexp(190°C), and (ii) a ratio of a fiber diameter of the constituent element [B] in a resin-cured plate obtained by impregnating the constituent element [B] into the epoxy resin composition and heat-curing it at 170°C to a fiber diameter before the heat-curing is referred to as Rexp(170°C), and Rexp(190°C) and Rexp(170°C) satisfy the following equation (1):

$$0.5 < (Rexp(190°C) - Rexp(170°C)) \times 5 < 5.0 \cdots (1)$$

Here, it is indicated that the larger the value of (Rexp(190°C) - Rexp(170°C)) in equation (1), the more the fibers of the non-woven fabric expand after heat curing, and the smaller the value, the smaller the expansion rate. However, it is preferred that the fiber-reinforced composite material of the present invention has the above-described value within the range shown in equation (1) and satisfies the following requirements.

Namely, in the present invention, by satisfying (requirement 1) that the constituent element [B] is made of a thermoplastic resin material, (requirement 2) that the $Cd_{20}$ (180°C) is in the range of 15 to 45 minutes, and (requirement 3) of the above-described equation (1), at the same time, the fiber-reinforced composite material can more reliably achieve at a high level both CAI strength and compressive strength under wet heat conditions, which are usually in a trade-off relationship, while also exhibiting more excellent crack resistance against cold-hot cycles.

The fiber diameter of constituent element [B] present in a resin-cured plate obtained by heat curing the aforementioned composition comprising the constituent element [B] made of amorphous resin material, the constituent element [C] and the constituent element [D] can be determined by taking a microscopic photograph of the surface of the resin-cured plate, measuring the fiber diameters of the fibers present in the image, and calculating the average value thereof.

Alternatively, further in the present invention , as condition 4, it is preferred that (i) a tensile modulus B82 (humidity controlled at 82°C) and a tensile modulus B25 (humidity controlled at 25°C) of the constituent element [B], and (ii) a tensile modulus E82 (humidity controlled at 82°C) and a tensile modulus E25 (25°C, 50% RH) of an epoxy resin cured plate obtained by heat curing the epoxy resin composition comprising the constituent elements [C] and [D] at 180°C satisfy the following equation (2):

$$0.7 < R_{ret} = (B82/B25)/(E82/E25) < 1.2 \cdots (2)$$

The fiber-reinforced composite material of the present invention preferably has the above-described value in the range shown in the equation (2) and satisfies the following requirements. Namely, in the present invention, by satisfying (requirement 1) that the constituent element [B] is composed of a thermoplastic resin material, (requirement 2) that the $Cd_{20}$ (180°C) is in the range of 15 minutes to 45 minutes, and (requirement 4) of the above-described equation (2), at the same time, the fiber-reinforced composite material can be more reliably provided with crack resistance against cold-hot cycles while achieving at a high level both CAI strength and compressive strength under wet heat conditions, which are usually in a trade-off relationship. In addition, the fiber-reinforced composite material of the present invention can also exhibit excellent performance in terms of shear properties under wet heat conditions, i.e., in-plane shear modulus and ILSS strength.

Alternatively, further in the present invention, as requirement 5, it is preferred that, when the layered body is compressed in an out-of-plane direction, a compressive stress at 160°C ($\sigma$160: MPa) and a compressive stress at 190°C ($\sigma$190: MPa) satisfy the following equation (3):

$$0.5 < (\sigma190/\sigma160) < 1.0 \cdots (3)$$

Here, $\sigma$190 and $\sigma$160 in the equation (3) indicate the compressive stress when the layered body is compressed in the out-of-plane direction at states heated to 190°C and 160°C, respectively. The $\sigma$190 and $\sigma$160 can be determined, for example, by compressing a layered body placed on a hot plate heated in a thermostatic chamber using a universal testing machine, and obtaining each stress from a stress at the time when the fiber volume content (Vf-t) of the layered body in terms of plate thickness reaches 60%. $\sigma$190/$\sigma$160 indicates a rate of change with respect to temperature when the layered body is compressed, and the closer to the upper limit value of 1.0, the smaller the change in compressive stress at the time of Vf 60% at 160 to 190°C.

In the present invention, when $\sigma 190/\sigma 160$ is in the range shown by the equation (3), because the degree of deformation of the layered body becomes small, in this temperature range, the non-woven fabric placed between the layers of the layered body during resin injection molding is less likely to deform, and the fiber-reinforced composite material obtained by resin injection molding has excellent mechanical properties and also has excellent impregnability during resin injection molding.

Furthermore, it is preferred that the fiber-reinforced composite material of the present invention has the above-described value in the range shown in equation (3) and satisfies the following requirements. Namely, in the present invention, by simultaneously satisfying (requirement 1) that the constituent element [B] is composed of a thermoplastic resin material, (requirement 2) that the $Cd_{20}(180°C)$ is in the range of 15 to 45 minutes, and (requirement 5) of the above-described equation (3), the fiber-reinforced composite material can more reliably achieve at a high level both CAI strength and compressive strength under wet heat conditions, which are usually in a trade-off relationship, while also exhibiting excellent crack resistance against cold-hot cycles.

Where, Vf-t is defined by the following equation, and the symbols used here are as shown below.

$$Vf\text{-}t = (W \times 100) / (\rho \times T)$$

W: Mass of reinforcing fibers contained in 1 $cm^2$ of layered body ($g/cm^2$)
$\rho$: density of reinforcing fiber ($g/cm^3$)
T: Thickness of layered body when compressed (cm)

Here, the epoxy resin composition comprising constituent elements [C] and [D] can contain core-shell type rubber particles as constituent element [E]. The content thereof is preferably 1 to 10 parts by mass, more preferably 3 to 6 parts by mass, with respect to 100 parts by mass of the total epoxy resin main ingredient. By containing the component [E] in this range, because the fracture toughness can be increased without impairing the elastic modulus of the epoxy resin cured material obtained by heat curing the epoxy resin composition, the interlaminar toughness of the fiber-reinforced composite material becomes excellent.

As such constituent element [E], can be used "Kane Ace (registered trademark)" MX-125, "Kane Ace (registered trademark)" MX-150, "Kane Ace (registered trademark)" MX-154, "Kane Ace (registered trademark)" MX-257, "Kane Ace (registered trademark)" MX-267, "Kane Ace (registered trademark)" MX-414, "Kane Ace (registered trademark)" MX-416, and "Kane Ace (registered trademark)" MX-451 (all supplied by Kaneka Corporation), "PARALOID (registered trademark)" EXL-2655, and EXL-2668 (all supplied by Dow Chemical Company), etc.

For preparing the epoxy resin composition containing this constituent element [E], for example, the components may be kneaded using a machine such as a kneader, a planetary mixer, a three-roll mill, or a twin-screw extruder, or may be mixed by hand using a beaker and a spatula, if uniform kneading is possible.

As aforementioned, the fiber-reinforced composite material of the present invention can be obtained by impregnating a layered body in which a constituent element [B] is incorporated between arbitrary layers among a plurality of layers of constituent elements [A] with an epoxy resin composition comprising constituent element [C] and constituent element [D] to obtain a molding material for a fiber-reinforced composite material, and then heat curing the molding material for a fiber-reinforced composite material. Namely, at the stage of the molding material for a fiber-reinforced composite material, the epoxy resin is in an uncured state, and it is cured to obtain the fiber-reinforced composite material. The layered body of the molding material for a fiber-reinforced composite material may be formed into a certain shape in advance before used. Although the method of composite integration with the epoxy resin composition is not particularly limited, for example, exemplified are RI method, liquid compression molding method, hand layup method, etc. Among them, the molding material for a fiber-reinforced composite material of the present invention can be suitably used in the RI method.

The RI method is a method in which the layered body is placed in a mold, a liquid epoxy resin composition is injected into the mold to be impregnated into the reinforcing fibers and non-woven fabric, and then the epoxy resin composition is cured by heating to obtain a fiber-reinforced composite material. The injection temperature and the curing temperature of the epoxy resin composition may or may not be the same, and are appropriately decided depending upon the size and shape of the molded article and the properties of the resin.

In the present invention, the mold used in the RI method may be a closed mold, or an open mold and a flexible film (bag). In the latter case, the reinforcing fiber base material is placed between the open mold of a rigid material and the flexible film, and the inside is usually depressurized to impregnate the resin.

Here, in the present invention, it is preferred that a value (Ti/Df) given by dividing the interlayer thickness (Ti) of the fiber-reinforced composite material obtained by heat curing at 180°C for 2 hours by the fiber diameter (Df) of the constituent element [B] is preferably in a range of 0.7 to 1.5, more preferably in a range of 0.9 to 1.1. By being in this range, because the volume ratio between the CF (carbon fiber) layer and the non-woven fabric layer becomes appropriate, the compressive strength under wet heat conditions is more improved.

Further, in the present invention, it is preferred that a fiber volume content (Vf) of the fiber-reinforced composite material obtained by heat curing at 180°C for 2 hours is in a range of 45 to 65%. By being in such a range, because high mechanical properties required for a structural material can be exhibited, and the interlayer between the CF layer and the non-woven fabric is appropriately formed, the compressive strength under wet heat conditions becomes excellent. Vf can be calculated, for example, according to the nitric acid decomposition method described in JIS K7075 (1991), by dividing the weight of the CF residue after decomposition by the weight of the test piece before decomposition.

Examples

Hereinafter, the present invention will be explained in more detail with reference to examples, but the present invention is not limited to the descriptions of these examples. The constituent elements used in the examples and comparative examples are as follows.

<Materials used>

·Constituent element [A]: Reinforcing fiber used in fiber-reinforced base material

[A]-1: carbon fiber "TORAYCA (registered trademark)" T800G-24K-71E (supplied by Toray Industries, Inc.)
[A]-2: carbon fiber "TORAYCA (registered trademark)" T1100G-24K-71E (supplied by Toray Industries, Inc.)

·Constituent element [B]: Thermoplastic resin material used in non-woven fabric

[B]-1: polyamide 6I,
[B]-2: polyamide 6I/610,
[B]-3: "Grilamid (registered trademark)" TR90 (supplied by EMS Chemie Japan Co., Ltd.) ,
[B]-4: "Grilamid (registered trademark)" TR55 (supplied by EMS Chemie Japan Co., Ltd.) ,
[B]-5: "Grilamid (registered trademark)" TR30 (supplied by EMS Chemie Japan Co., Ltd.) ,
[B]-6: polyamide 6/12 (20:80),
[B]-7: polyamide 6/12 (80:20).

·Constituent element [C]: Epoxy resin main ingredient

[C]-1: "Sumiepoxy (registered trademark)" ELM-434VL (supplied by Sumitomo Chemical Co., Ltd.),
[C]-2: GAN (supplied by Nippon Kayaku Co., Ltd.),
[C]-3: "TOREP (registered trademark)" A-204E (supplied by Toray Fine Chemicals Co., Ltd.),
[C]-4: "EPICLON (registered trademark)" HP-7200L (supplied by DIC Corporation),
[C]-5: "EPICLON (registered trademark)" HP-7200H (supplied by DIC Corporation),
[C]-6: "jER (registered trademark)" 825 (supplied by Mitsubishi Chemical Corporation),
[C]-7: "EPICLON (registered trademark)" 830 (supplied by DIC Corporation),
[C]-8: "jER (registered trademark)" 630 (supplied by Mitsubishi Chemical Corporation).

·Constituent element [D]: Amine compound

[D]-1: "Ethacure" 300 (supplied by Albemarle Corporation),
[D]-2: "jER Cure (registered trademark)" WA (supplied by Mitsubishi Chemical Corporation),
[D]-3: "Lonzacure (registered trademark)" M-MIPA (supplied by Lonza Corporation),
[D]-4: "KAYAHARD (registered trademark)" A-A (supplied by Nippon Kayaku Co., Ltd.),

[D]-5: "Lonzacure (registered trademark)" M-DEA (supplied by Lonza Corporation),
[D]-6: "Lonzacure (registered trademark)" M-DIPA (supplied by Lonza Corporation),
[D]-7: "Lonzacure (registered trademark)" M-CDEA (supplied by Lonza Corporation),
[D]-8: SEIKACURE-S (supplied by Seika Co., Ltd.),
[D]-9: 3,3'-DAS (supplied by Mitsui Chemicals Fine Co., Ltd.).

·Constituent element [E]: Core-shell type rubber particle

"Kane Ace (registered trademark)" MX-414 (75% by mass of glycidyl amine type epoxy resin and 25% by mass of butadiene-based core-shell type rubber particles) (supplied by Kaneka Corporation)

·Other additive ingredients

DIC-TBC (t-butylcatechol) (supplied by DIC Corporation).

<Method for preparing epoxy resin composition>

A predetermined amount of constituent element [C] and constituent element [E] were placed in a kneader, heated up to 60-150°C, and appropriately kneaded until respective component were compatible to obtain an epoxy main ingredient liquid. Component [D] and other additive components were added to a separate container, and heated as needed to make them compatible to obtain a hardener liquid. Predetermined amounts of epoxy main ingredient liquid and hardener liquid were mixed, and degassed for 60 minutes with a vacuum defoamer to obtain an epoxy resin composition. The composition of the epoxy resin is as shown in Table 1.

<Method for evaluating $Cd_{20}$ (180°C) of epoxy resin composition>

2 mL of the epoxy resin composition obtained in the above-described <Method for preparing epoxy resin composition> was weighed out and placed on a micropress to clamp it, and the ionic viscosity was measured using a dielectric measuring device (Cure Monitor LT-451, supplied by Lambient Technologies Corporation). The ionic viscosity of the epoxy resin composition reaches a minimum value at the start of measurement, increases as curing progresses, and then saturates upon completion. In the present invention, the cure index was calculated from the time-ionic viscosity curve obtained at 180°C in accordance with the test standard ASTM E2039, and the time at which the cure index reached 20% at 180°C was determined as $Cd_{20}$ (180°C).

<Method for evaluating tensile modulus E25 (25°C, 50%RH) of epoxy resin composition>

The epoxy resin composition obtained according to the above-described <Method for preparing epoxy resin composition> was degassed in a vacuum, and then cured at 180°C for 2 hours in a mold set to a thickness of 2 mm using a 2 mm thick "Teflon (registered trademark)" spacer to obtain a 2 mm thick cured epoxy resin plate. The obtained cured epoxy resin plate was processed into a 1BA type dumbbell-shaped test piece according to JIS K7161 (1994). Using an Instron universal testing machine (supplied by Instron Corporation), a resin tensile test was performed at room temperature (25°C, 50%RH) with a chuck distance set to 58 mm and a test speed of 1 mm/min, and the tensile modulus E25 (25°C, 50%RH) was measured. At this time, the average value of the values measured for the number of samples n=8 was employed as the value of the tensile modulus.

<Method for evaluating tensile modulus E82 (wet heat 82°C) of epoxy resin composition>

An epoxy resin cured plate was obtained in the same manner as in the above-described < Method for evaluating tensile modulus E25 (25°C, 50%RH) of epoxy resin composition>, and the obtained epoxy resin cured plate was processed into a 1BA type dumbbell-shaped test piece according to JIS K7161 (1994), and then immersed in boiling water for 48 hours. The test piece taken out was subjected to a resin tensile test in a high temperature environment (82°C) at a test speed of 1 mm/min using an Instron universal testing machine (supplied by Instron Corporation) with a chuck distance of 58 mm, and the tensile modulus E82 (wet heat 82°C) was measured. At this time, the average value of the values measured for the number of samples n=8 was employed as the value of the tensile modulus.

<Method for preparing thermoplastic resin material>

[B]-1 and [B]-2, and [B]-6 and [B]-7 described in the above-described <Materials used> were prepared by polycondensation under pressure conditions using an autoclave. Polyamide 6I ([B]-1) was prepared by increasing the pressure of a reaction solution in which isophthalic acid and hexamethylenediamine were mixed in equimolar amounts using ion-exchanged water as a solvent in an autoclave to 1.7 MPa and reacting at 260°C for 3 hours to obtain an amorphous polyamide 6I. Polyamide 6I/610 ([B]-2) was prepared by blending isophthalic acid/sebacic acid/hexamethylenediamine at a molar ratio of 1/1/2 so that the copolymerization ratio of polyamide 6I and polyamide 610 became 50/50, elevating the pressure to 1.7 MPa in ion-exchanged water solvent and reacting at 260°C for 5 hours to obtain an amorphous polyamide 6I/610. Polyamide 6/12 (20:80) ([B]-6) was prepared by blending ε-caprolactam/laurolactam at a molar ratio of 1/4 so that the copolymerization ratio of polyamide 6 and polyamide 12 became 20/80, elevating the pressure to 1.7 MPa in ion-exchanged water solvent and reacting at 260°C for 5 hours to obtain a crystalline polyamide 6/12 (20:80). Polyamide 6/12 (80:20) ([B]-7) was prepared by blending ε-caprolactam/laurolactam at a molar ratio of 4/1 so that the copolymerization ratio of polyamide 6 and polyamide 12 became 80/20, elevating the pressure to 1.7 MPa in ion-exchanged water solvent and reacting at 260°C for 5 hours to obtain a crystalline polyamide 6/12 (80:20).

<Method for measuring enthalpy of fusion of thermoplastic resin material>

5 mg of the thermoplastic resin material prepared according to the above-described <Method for preparing thermoplastic resin material> or purchased was weighed into a sample pan and measured using a differential scanning calorimeter (Q-2500, supplied by TA Instruments Corporation) at a constant temperature elevation rate of 10°C/min from 0°C to 250°C. From the obtained DSC curve, the enthalpy of fusion was calculated according to JIS K7121 (1987).

<Method for measuring load deflection temperature of thermoplastic resin material>

The thermoplastic resin material prepared or purchased according to the above-described <Method for preparing thermoplastic resin material> was placed on a stainless-steel plate equipped with a 4 mm thick stainless-steel spacer, and a stainless-steel plate preheated to 250°C was placed on top and held while heating and pressing with a hand press. After cooling to room temperature, the resin material was taken out and processed into a test piece with a length of 80 mm, a width of 10 mm, and a thickness of 4 mm. A temperature-elevation creep test was performed on the obtained test piece at a condition applied with a constant load of 1.8 MPa according to JIS 7191-2 (2015) Method A, and the load deflection temperature was calculated.

<Method for evaluating tensile modulus B25 (humidity controlled at 25°C) of thermoplastic resin material>

The thermoplastic resin material prepared or purchased according to the above-described <Method for preparing thermoplastic resin material> was placed on a stainless-steel plate equipped with a 2 mm thick stainless-steel spacer, and a stainless-steel plate preheated to 250°C was placed on top and held while heating and pressing with a hand press. After cooling to room temperature, the resin material was taken out and processed into a 1BA type dumbbell-shaped test piece according to JIS K7161 (1994). The processed test piece was subjected to humidity conditioning treatment for 30 days in a room temperature environment (25°C, 50% RH). The test piece subjected to humidity conditioning treatment was subjected to a resin tensile test in a room temperature environment (25°C, 50%RH) using an Instron universal testing machine (supplied by Instron Co., Ltd.) with a chuck distance set to 58 mm and a test speed of 1 mm/min, and the tensile modulus B25 (humidity controlled at 25°C) was measured. At this time, the average value of the values measured for the number of samples n = 8 was employed as the value of the tensile modulus.

<Method for evaluating tensile modulus B82 (humidity controlled at 82°C) of thermoplastic resin material>

A 1BA type dumbbell-shaped test piece made of a thermoplastic resin material was obtained by the same method as described above <Method for evaluating tensile modulus B25 (humidity controlled at 25°C) of thermoplastic resin material>, and then subjected to humidity conditioning treatment for 30 days in a room temperature environment (25°C, 50%RH). The test piece subjected to humidity conditioning treatment was subjected to a resin tensile test in a high temperature environment (82°C) at a test speed of 1 mm/min using an Instron universal testing machine (supplied by Instron Corporation) with a chuck distance set to 58 mm, and the tensile modulus B82 (humidity controlled at 82°C) was measured. At this time, the average value of the values measured for the number of samples n = 8 was employed as the value of the tensile modulus.

<Method for calculating the tensile elastic modulus retention ratio $R_{ret}$ of thermoplastic resin material and epoxy resin composition>

The retention ratio $R_{retB}$ of the thermoplastic resin material at 82°C relative to the tensile modulus at 25°C was calculated by dividing B82 obtained as above by B25. Then, the retention rate $R_{retE}$ of the epoxy resin composition at 82°C relative to the tensile modulus at 25°C was calculated by dividing E82 obtained as above by E25. Next, the tensile modulus retention ratio $R_{ret}$ of the thermoplastic resin material and the epoxy resin composition was calculated by dividing $R_{retB}$ by $R_{retE}$.

<Method for manufacturing non-woven fabric>

The thermoplastic resin material used in the constituent element [B]: non-woven fabric described in <Materials used> above was used to manufacture a non-woven fabric by using a melt-blow type non-woven fabric manufacturing device SWMB-T100 (supplied by Shinwa Kogyo Co., Ltd.) with a cylinder temperature set to 250 to 350°C.

<Method for measuring areal weight (Wb) of non-woven fabric>

The areal weight: Wb (g/m$^2$) was measured for the non-woven fabric manufactured according to the above-described <Method for manufacturing non-woven fabric> and purchased "Spunfab (registered trademark)" PA1206 and PA1209 (all supplied by Spunfab Ltd.). Ten samples of 400 mm × 400 mm were taken at 1 m intervals from the non-woven fabric wound into a 500 mm wide roll. The weight of each sample was measured using an electronic balance, and the value (Wb) divided by the area was averaged to obtain the areal weight. The obtained Wb (g/m$^2$) is shown in Table 2 or thereafter.

<Method for observing fiber diameter of non-woven fabric>

The number average fiber diameter Df ($\mu$m) was measured for the non-woven fabrics manufactured according to the above-described <Method for manufacturing non-woven fabric> and purchased "Spunfab (registered trademark)" PA1206 and PA1209 (both supplied by Spunfab Ltd.). For each non-woven fabric, 10 measurement samples of 2 mm × 2 mm were taken from random locations, and fiber diameters observed at a magnification of 500 times using a digital microscope VHX-6000 (supplied by Keyence Corporation) (hereinafter referred to as VHX6000) were averaged at a total of 50 points to calculate Df. At this time, when the cross-sectional shape of the fiber was a perfect circle, the diameter was taken as the fiber diameter, and when the fiber was not a perfect circle, the longest diameter when the fiber was observed in a cross section perpendicular to the axial direction was taken as the fiber diameter.

<Method for evaluating expansion rate of non-woven fabric fibers present in epoxy resin cured plate>

The epoxy resin composition prepared according to the above-described <Method for preparing epoxy resin composition> was degassed in a vacuum, and then the non-woven fabric prepared according to the above-described <Method for manufacturing non-woven fabric> was attached into a mold set at a thickness of 0.3 mm using a 0.3 mm thick "Teflon (registered trademark)" spacer, and the degassed epoxy resin composition was poured into it and cured at temperatures of 170°C and 190°C for 2 hours, respectively, to obtain a cured resin plate with a thickness of 0.3 mm. From the cured plates containing the prepared constituent element [B], constituent element [C], and constituent element [D], measurement points of 5 mm x 5 mm were selected, and the fiber diameters observed at a magnification of 300 times using VHX6000 were averaged at a total of 50 points to obtain the fiber diameter. At this time, the fiber diameter (D170) when cured at 170°C and the fiber diameter (D190) when cured at 190°C were calculated, respectively. D190 and D170 were each divided by Df obtained according to the above-described <Method for observing fiber diameter of non-woven fabric> to calculate Rexp(190°C) and Rexp(170°C).

<Method for manufacturing reinforcing fiber base material>

For the constituent elements [A]-1 and [A]-2 described in the above <Materials used>, a unidirectional sheet and a satin weave sheet were manufactured by arranging a plurality of [A]-1 or [A]-2 in parallel using a multi-axis loom. The areal weight of the carbon fibers is as shown in Table 2 and subsequent tables.

<Method for manufacturing layered body>

The reinforcing fiber base material manufactured according to the above-described <Method for manufacturing reinforcing fiber base material> was cut to 400 mm x 400 mm, and then the non-woven fabric manufactured according to the above-described <Method for manufacturing non-woven fabric> was placed on the top surface to form the first layer. For the layered body for the compressive stress test only, after the reinforcing fiber base material produced according to the above-described <Method for manufacturing reinforcing fiber base material> was cut to 50 mm x 50 mm, the non-woven fabric produced according to the above-described <Method for manufacturing non-woven fabric> was placed on the top surface to form the first layer. The fiber direction of the reinforcing fiber base material of the first layer was set to 0°, and the layered body was manufactured to have the following layered configuration.

For compression after impact (CAI), open hole compression (OHC), compressive stress tests and cold-hot cycle durability test, the configuration was $[(+45°/- 45°/0°/90°)]_{2S}$, and for interlaminar shear (ILSS) tests, the configuration was $[0°]_8$.

<Compressive stress test method>

A compression platen was placed on an Instron universal testing machine (supplied by Instron Corporation), and after the compression platen was heated to 160°C or 190°C using a thermostatic chamber, the layered body for compressive stress test prepared according to the above-described <Method of manufacturing layered body> was placed at the central portion of the compression platen, and the layered body was compressed at a test speed of 1 mm/min to measure the compressive stress. The compressive stress generated when the Vf-t (%) of the layered body was 60% was measured at n=20, and the average value was taken as σ160 (MPa) or σ190 (MPa). The obtained σ190 was divided by σ160 to calculate σ190/σ160.

Where, Vf-t is defined by the following equation, and the symbols used here are as shown below.

$$Vf\text{-}t = (W \times 100)/(\rho \times T)$$

W: mass of reinforcing fibers contained in 1 cm$^2$ of layered body (g/cm$^2$)
$\rho$: density of reinforcing fiber (g/cm$^3$)
T: thickness of layered body when compressed (cm)

<Method for molding fiber-reinforced composite material: VaRI method>

The layered body manufactured according to the above-described <Method for manufacturing layered body> was placed on an aluminum tool plate, the whole thereof was covered with a polyamide bag film, and it was heated in a hot air dryer set at 100°C while the inside of the film was vacuum-suctioned. After confirming that the temperature of the layered body reached 100°C, the epoxy resin composition obtained according to the above <Method for preparing epoxy resin composition> was injected at a pressure difference with atmospheric pressure while maintaining the temperature at 100°C. After the epoxy resin composition was impregnated, by elevating the temperature to the molding temperatures shown in Table 2 and subsequent tables while continuing pressure reduction, the molded product was obtained by heat curing for 2 hours. This molding method is a vacuum assisted resin infusion (VaRI) method.

<Method for molding fiber-reinforced composite material: RTM method>

The layered body manufactured according to the above-described <Method for manufacturing layered body> was placed on the lower die of a double-sided carbon steel mold, the upper die was then closed and pressurized, and the inside of the mold was heated to a predetermined temperature while being evacuated. Next, the epoxy resin composition obtained according to the above-described <Method for preparing epoxy resin composition> was injected under pressure from the injection hole, and then heat-cured for 2 hours to obtain a molded article. The molding temperature, mold pressure, and injection pressure are as shown in shown in Table 2 and subsequent tables. This molding method is a Resin Transfer Molding (RTM) method.

<CAI Test Method>

The layered body for CAI prepared according to the above-described <Method for manufacturing layered body> was heat-cured according to the above-described <Method for molding fiber-reinforced composite material: VaRI method> or <Method for molding fiber-reinforced composite material: RI method> to obtain a molded article. A rectangular test piece of 150 mm x 100 mm was cut out from the obtained molded article, and a drop weight impact of 8J per 1 mm of thickness of the test piece was applied to the center of the test piece according to ASTM D7136, and then a residual compressive strength was measured according to the test standard ASTM D7137. The measurement was performed with n=6, and the average value was taken as the CAI strength (MPa).

<Room temperature OHC test method>

The layered body for OHC prepared according to the above-described <Method for manufacturing layered body> was heat-cured according to the above-described <Method for molding fiber-reinforced composite material: VaRI method> or <Method for molding fiber-reinforced composite material: RI method> to obtain a molded article. A rectangular test piece of 305 mm x 38 mm was cut out from the obtained molded article, and a hole of 6.35 mm in diameter was drilled in the center of the test piece to prepare a test piece. A compression test was performed with n = 6 according to the test standard ASTM D6484, and the average value was taken as the room temperature OHC strength (MPa).

<Wet heat OHC test method>

Similarly to the above-described <Room temperature OHC test method>, a rectangular test piece of 305 mm $\times$ 38 mm was prepared by drilling a 6.35 mm hole in the center, and immersed in hot water heated to 70°C for 2 weeks. The immersion-treated test piece was subjected to a compression test with n=6 in a high-temperature environment of 82°C according to the test standard ASTM D6484, and the average value was taken as the wet heat OHC strength (MPa).

<Room temperature in-plane shear test method>

The layered body for in-plane shear prepared according to the above-described <Method for manufacturing layered body> was heat-cured according to the above-described <Method for molding fiber-reinforced composite material: VaRI method> or <Method for molding fiber-reinforced composite material: RI method> to obtain a molded article. A rectangular test piece of 250 mm x 25 mm was cut out from the obtained molded article, an in-plane shear test was performed at a test speed of 2 mm/min with n=6 according to the test standard ASTM D3518, and the average value of the obtained in-plane shear moduli was taken as the room temperature in-plane shear modulus (GPa).

<Wet heat in-plane shear test method>

Similarly to the above-described <Room temperature in-plane shear test method>, a rectangular test piece of 250 mm x 25 mm was prepared and immersed for 2 weeks in hot water heated to 70°C. The immersion-treated test piece was subjected to an in-plane shear test with n=6 at a test speed of 2 mm/min according to the test standard ASTM D3518, and the average value of the obtained in-plane shear moduli was defined as the wet heat in-plane shear modulus (GPa).

<Room temperature ILSS test method>

The layered body for ILSS prepared according to the above-described <Method for manufacturing layered body> was heat-cured according to the above-described <Method for molding fiber-reinforced composite material: VaRI method> or <Method for molding fiber-reinforced composite material: RI method> to obtain a molded article. A rectangular test piece with a size in a fiber direction of 20 mm and a size in a fiber orthogonal direction of 10 mm was cut out from the obtained molded article, and a three-point bending test set at a distance between fulcrums of 10 mm was performed with n=6 according to the test standard EN2563, and the average value was taken as the room temperature ILSS strength (MPa).

<Wet heat ILSS test method>

Similarly to the above-described <Room temperature OHC test method>, a rectangular test piece of 20 mm $\times$ 10 mm was prepared and immersed for 2 weeks in hot water heated to 70°C. The immersion-treated test pieces was subjected to a three-point bending test with n = 6 in a high-temperature environment of 82°C in accordance with the test standard EN2563, and the average value was taken as the wet heat ILSS strength (MPa).

<Cold-hot cycle durability test method>

The layered body for the cold-hot cycle durability test prepared according to the above-described <Method for manufacturing layered body> was heat-cured according to the above-described <Method for molding fiber-reinforced composite material: VaRI method> or <Method for molding fiber-reinforced composite material: RI method> to obtain a molded article. A test piece with a size of 80 mm x 80 mm was cut out from the obtained molded article and exposed to a wet heat environment (50°C, 99%RH) for 12 hours. The exposed test piece was subjected to a cold-hot cycle of -55°C to 70°C 2,000 times in succession. At this time, a temperature holding time of 15 minutes was provided after reaching -55°C and 70°C. A cross section of the test piece after the cold-hot cycle was completed was cut out and observed at a magnification of 200 times using a VHX6000, and the number of cracks that occurred was counted.

<Method for evaluating surface quality and interlayer thickness>

The layered body for CAI prepared according to the above-described <Method for manufacturing layered body> was heat-cured according to the above-described <Method for molding fiber-reinforced composite material: VaRI method> or <Method for molding fiber-reinforced composite material: RTM method> to obtain a molded article. The surface cut out from the cross section of the obtained molded article was polished, and the thickness between the CF layers was measured at a total of 20 points using VHX6000 at a magnification of 200 times, and the average was taken as the interlayer thickness ($\mu$m). Further, the surface quality of the molded article was evaluated according to the following criteria.

C: There are areas not impregnated with resin (blur) and areas where the reinforcing fibers are meandering (waviness).
B: blur present, no waviness
A: no blur, no waviness

<Method for measuring impregnation time and fiber volume content>

When resin was injected into the layered body for CAI prepared according to the above-described <Method for manufacturing layered body> according to the above-described <Method for molding fiber-reinforced composite material: VaRI method> or <Method for molding fiber-reinforced composite material: RTM method>, the time it took for the resin to reach the suction hole from the injection hole was defined as the impregnation time (min). Further, the fiber volume content (Vf) (%) of the molded article was calculated by dividing the weight of the CF residue after decomposition by the weight of the test piece before decomposition according to the nitric acid decomposition method described in JIS K7075 (1991).

(Example 1-0)

An epoxy resin composition was prepared according to the above-described <Method for preparing epoxy resin composition> using 100 parts by mass of "Sumiepoxy (registered trademark)" ELM-434VL (constituent element [C]), 9.5 parts by mass of "KAYAHARD (registered trademark)" A-A (constituent element [D]), and 66.4 parts by mass of "Lonzacure (registered trademark)" M-CDEA (constituent element [D]) as the epoxy resin main ingredients. When the $Cd_{20}$ (180°C) of this epoxy resin composition was evaluated according to the above <Method for evaluating $Cd_{20}$ (180°C) of epoxy resin composition>, it was 21.0 minutes.

According to the above-described <Method for preparing thermoplastic resin material> and <Method for manufacturing non-woven fabric>, a non-woven fabric comprising PA6I with an areal weight (Wb) of 5 $g/m^2$ was manufactured. The enthalpy of fusion measured according to the above-described <Method for measuring enthalpy of fusion of thermoplastic resin material> was 0 J/g, and the resin was amorphous. When the average fiber diameter (Df) was measured according to the above-described <Method for observing fiber diameter of non-woven fabric>, it was 40 $\mu$m, and the value of Wb/Df became 0.13. With respect to this non-woven fabric (constituent element [B]) and the epoxy resin composition (a mixture of constituent element [C] and constituent element [D]), the Rexp(190°C) measured according to the <Method for evaluating the expansion rate of non-woven fabric fibers present in epoxy resin cured plate> was 1.05 and a Rexp(170°C) was 2.25, and the value of (Rexp(190°C) - Rexp(170°C)) x 5 was 6.00, which was outside the range of requirement 3.

Using "TORAYCA (registered trademark)" T800G-24K-71E as the reinforcing fibers, a reinforcing fiber base material (constituent element [A]) was manufactured according to the above-described <Method for manufacturing reinforcing fiber base material>, a layered body was prepared according to the above-described <Method for manufacturing layered body>, and molded articles for CAI evaluation, OHC evaluation, ILSS evaluation, and cold-hot cycle durability test were prepared at a curing temperature of 180°C according to the above-described <Method for molding fiber-reinforced composite material: VaRI method>.

When the molded article obtained was evaluated according to the above-described <CAI test method>, <Room temperature OHC test method>, <Wet heat OHC test method>, <Room temperature ILSS test method>, <Wet heat ILSS test method> and <Cold-hot cycle durability test method>, excellent impact resistance and compression properties were shown with a CAI strength of 265 MPa, a room temperature OHC strength of 285 MPa, and a wet heat OHC strength of 255 MPa. Further, the room temperature ILSS strength and wet heat ILSS strength were 105 MPa and 82 MPa, respectively, and the number of cracks after the cold-hot cycle durability test was 3, which was excellent.

Further, when the surface quality of the molded article was evaluated according to the above-described <Method for evaluating surface quality and interlayer thickness>, it was determined to be B, which was good. The impregnation time measured according to the above-described <Method for measuring impregnation time and fiber volume content> was 21.0 minutes, exhibiting excellent impregnation property. The Vf of this molded article was 59.5%.

(Examples 1-1 to 1-4, 1-6 to 1-13, 1-15 to 1-16)

Except for changing the epoxy resin composition as shown in Table 1, an epoxy resin composition was prepared in the same manner as in Example 1-0. Except for changing the thermoplastic resin material of the constituent element [B] as shown in Tables 2 and 3, a constituent element [B] was prepared in the same manner as in Example 1-0. Further, the enthalpy of fusion was measured in the same manner as in Example 1-0, and was 0 J/g, indicating amorphous. The values of $Cd_{20}$ (180°C) of the respective examples were 15.7 minutes to 31.0 minutes, and the values of $(Rexp(190°C)-Rexp(170°C)) \times 5$ was 0.75 to 4.50, which satisfied requirement 3.

Fiber-reinforced composite materials were prepared using the constituent elements listed in Table 2 in the same manner as in Example 1-0, and when the CAI strength, room temperature and wet heat ILSS, cold-heat cycle durability, and room temperature and wet heat OHC were evaluated for each Example, good physical properties were obtained at all levels, and compressive strength under wet heat environments, impact resistance, and crack resistance after cold-hot cycles were all achieved at high levels. Further, the impregnation times for respective Examples were 9.0 to 18.0 minutes, and excellent impregnation properties were demonstrated in VaRI molding. Furthermore, the surface qualities of the molded articles were also good.

(Examples 1-5, 1-14, 1-17)

Except for changing the epoxy resin composition as shown in Table 1, an epoxy resin composition was prepared in the same manner as in Example 1-0. Except for changing the thermoplastic resin material of the constituent element [B] as shown in Tables 2 and 3, a constituent element [B] was prepared in the same manner as in Example 1-0. As a result of measuring the enthalpies of fusion in the same manner as in Example 1-0, all were 0 J/g, indicating that the materials were amorphous. The values of $Cd_{20}$ (180°C) of respective Examples were 16.2 minutes to 18.3 minutes, and the values of $(Rexp(190°C)-Rexp(170°C)) \times 5$ were 0.85 to 3.40.

Fiber-reinforced composite materials were prepared using the constituent elements listed in Tables 2 and 3 according to the above-described <Method for molding fiber-reinforced composite material: RTM method>, and the CAI strength, room temperature and wet heat ILSS, cold-hot cycle durability, and room temperature and wet heat OHC of each example were evaluated, and good physical properties were obtained at all levels. Further, the impregnation times of respective Examples were 5.0 to 6.5 minutes, and excellent impregnation properties were demonstrated also in RI molding. Furthermore, the surface qualities of the molded articles were good.

(Comparative Example 1-1)

Composition 4 shown in Table 1 was used for the epoxy resin composition, and "Spunfab (registered trademark)" PA1206 (supplied by Spunfab Ltd.), which was a crystalline non-woven fabric, was used as constituent element [B]. $Cd_{20}$ (180°C) was 31.0 minutes, but the value of $(Rexp (190°C) - Rexp (170°C)) \times 5$ was 7.00, which was outside the range of requirement 3.

A fiber-reinforced composite material was prepared in the same manner as in Example 1-0 using the constituent elements shown in Table 4, and when the CAI strength, room temperature and wet heat ILSS, cold-hot cycle durability, and room temperature and wet heat OHC were evaluated, the CAI strength was 290 MPa which was excellent, but the wet heat OHC was 215 MPa which was insufficient. Further, the impregnation time was 24.0 minutes which was long.

(Comparative Example 1-2)

An epoxy resin composition similar to that of Comparative Example 1-1 was prepared, except that the constituent element [B] was "Spunfab (registered trademark)" PA1209 (supplied by Spunfab Ltd.). $Cd_{20}$ (180°C) was 31.0 minutes, but the value of $(Rexp(190°C) - Rexp(170°C)) \times 5$ was 0.25, which was outside the range of requirement 3.

A fiber-reinforced composite material was prepared in the same manner as in Comparative Example 1-1, except that the constituent element [B] was changed as described above, and when the CAI strength, room temperature and wet heat ILSS, cold-hot cycle durability, and room temperature and wet heat OHC were evaluated, the CAI strength was 223 MPa which was insufficient and the wet heat OHC was 210 MPa which was insufficient. Further, the number of cracks generated after the cold-hot cycle durability test was 15 which was many, and the surface quality of the molded article was determined to be also rank C.

(Comparative Examples 1 to 3)

Composition 10 shown in Table 1 was used for the epoxy resin composition, and the constituent element [B] was the same as in Examples 1 to 6. The value of $(Rexp(190°C) - Rexp(170°C)) \times 5$ was 0.60, but $Cd_{20}$ (180°C) was short at 14.0, which was outside the range of requirement 2.

A fiber-reinforced composite material was prepared in the same manner as in Comparative Example 1-1, and when the CAI strength, room temperature and wet heat ILSS, cold-hot cycle durability, and room temperature and wet heat OHC were evaluated, the CAI strength was 200 MPa which was insufficient and the wet heat OHC was 230 MPa which was insufficient. Further, the number of cracks generated after the cold-hot cycle durability test was 13 which was many.

(Comparative Examples 1 to 4)

The epoxy resin composition and constituent element [B] were the constituent elements described in Example 1-1 of Patent document 1 (WO 2022/149591). The $Cd_{20}$ (180°C) was short at 3.0 minutes, which was outside the range of requirement 2, and the value of (Rexp(190°C)-Rexp(170°C)) x 5 was 0.40, which was outside the range of requirement 3.

A fiber-reinforced composite material was prepared in the same manner as in Comparative Example 1-1, and when the CAI strength, room temperature and wet heat ILSS, cold-hot cycle durability, and room temperature and wet heat OHC were evaluated, the CAI strength was 250 MPa which was good, but the wet heat OHC strength was 230 MPa which was insufficient. Further, the Vf was 54% which was low.

(Comparative Example 1-5)

Composition 7 shown in Table 1 was used for the epoxy resin composition, and the constituent element [B] was the same material as in Examples 1 to 3. The value of (Rexp(190°C)-Rexp(170°C)) x 5 was 3.00, but $Cd_{20}$ (180°C) was 47.5, which was long and outside the range of requirement 2.

A fiber-reinforced composite material was prepared in the same manner as in Comparative Example 1-1, and when the CAI strength, room temperature and wet heat ILSS, cold-hot cycle durability, and room temperature and wet heat OHC were evaluated, the CAI strength was 280 MPa which was high, but the wet heat OHC was 210 MPa and the wet heat ILSS strength was 55 MPa, which were insufficient. Further, the surface quality of the molded article was determined to be rank C which was low.

(Comparative Examples 1 to 6)

Composition 9 shown in Table 1 was used for the epoxy resin composition, and the constituent element [B] was the same material as in Examples 1 to 6. The value of (Rexp(190°C)-Rexp(170°C)) x 5 was 0.15, and $Cd_{20}$ (180°C) was 6.7, both of which were outside the ranges of requirement 3 and requirement 2.

A fiber-reinforced composite material was prepared in the same manner as in Comparative Example 1-1, and when the CAI strength, room temperature and wet heat ILSS, cold-hot cycle durability, and room temperature and wet heat OHC were evaluated, the CAI strength was 200 MPa which was significantly insufficient, and the wet heat OHC was 215 MPa which was insufficient. Further, the surface quality of the molded article was determined to be rank C which was low.

(Example 2-0)

An epoxy resin composition was prepared according to the above-described <Method for preparing epoxy resin composition> using 100 parts by mass of "Sumiepoxy (registered trademark)" ELM-434VL (constituent element [C]), 9.5 parts by mass of "KAYAHARD (registered trademark)" A-A (constituent element [D]), and 66.4 parts by mass of "Lonzacure (registered trademark)" M-CDEA (constituent element [D]) as the epoxy resin main ingredients. When the $Cd_{20}$ (180°C) of this epoxy resin composition was evaluated according to the above-described <Method for evaluating $Cd_{20}$ (180°C) of epoxy resin composition>, it was 21.0 minutes.

Further, with respect to this epoxy resin composition, as the result that E25 was evaluated according to <Method for evaluating tensile modulus E25 (25°C, 50%RH) of epoxy resin composition>, it was 3.83 GPa, and as the result that E82 was evaluated according to <Method for evaluating tensile modulus E82 (wet heat 82°C) of epoxy resin composition>, it was 3.15 GPa.

According to the above-described <Method for preparing thermoplastic resin material> and <Method for manufacturing non-woven fabric>, a non-woven fabric comprising PA6I with an areal weight (Wb) of 5 g/m² was prepared. The enthalpy of fusion measured according to the above-described <Method for measuring enthalpy of fusion of thermoplastic resin material> was 0 J/g, and the resin was amorphous. Further, when the average fiber diameter (Df) was measured according to the above-described <Method for observing fiber diameter of non-woven fabric>, it was 40 μm, and the value of Wb/Df was 0.13. With respect to this non-woven fabric (constituent element [B]), as the result that B25 was evaluated according to the <Method for evaluating tensile modulus B25 (humidity controlled at 25°C) of thermoplastic resin material>, it was 2.20 GPa, and as the result that B82 was evaluated according to the <Method for evaluating tensile modulus B82 (humidity controlled at 82°C) of thermoplastic resin material>, it was 1.10 GPa.

With respect to the non-woven fabric (constituent element [B]) and the epoxy resin composition (a mixture of constituent element [C] and constituent element [D]), as the result that $R_{ret}$ was calculated according to the <Method for calculating the tensile elastic modulus retention ratio $R_{ret}$ of thermoplastic resin material and epoxy resin composition>, it was 0.61, which was outside the range of requirement 4.

Using "TORAYCA (registered trademark)" T800G-24K-71E as the reinforcing fibers, a reinforcing fiber base material (constituent element [A]) was manufactured according to the above-described <Method for manufacturing reinforcing fiber base material>, a layered body was prepared according to the above-described <Method for manufacturing layered body>, and molded articles for CAI evaluation, OHC evaluation, ILSS evaluation, and cold-hot cycle durability test were prepared at a curing temperature of 180°C according to the above-described <Method for molding fiber-reinforced composite material: VaRI method>.

When the molded article obtained was evaluated according to the above-described <CAI test method>, <Room temperature OHC test method>, <Wet heat OHC test method>, <Room temperature in-plane shear test method>, <Room temperature ILSS test method>, <Wet heat ILSS test method> and <Cold-hot cycle durability test method>, the CAI strength was 265 MPa, the room temperature OHC strength was 285 MPa, and the wet heat OHC strength was 255 MPa which showed excellent impact resistance and compression properties. Furthermore, the room temperature in-plane shear modulus and wet heat in-plane shear modulus were 5.0 GPa and 3.5 GPa , respectively, and the room temperature ILSS strength and wet heat ILSS strength were 105 MPa and 82 MPa, respectively, which showed excellent in-plane shear properties, and the number of cracks after the hot-cold cycle durability test was 3 which was excellent.

Further, when the surface quality of the molded article was evaluated according to the above-described <Method for evaluating surface quality and interlayer thickness>, it was rank B which was good. The impregnation time measured according to the above-described <Method for measuring impregnation time and fiber volume content> was 21.0 minutes, indicating excellent impregnation property. Further, the Vf of this molded article was 59.0%.

(Examples 2-1 to 2-4, 2-6 to 2-11)

Except for changing the epoxy resin composition as shown in Table 1, an epoxy resin composition was prepared in the same manner as in Example 2-0. Except for changing the thermoplastic resin material of the constituent element [B] as shown in Tables 5 and 6, a constituent element [B] was prepared in the same manner as in Example 2-0. As the result of measuring the enthalpy of fusion in the same manner as in Example 2-0, all were 0 J/g, indicating that the material was amorphous. The values of $Cd_{20}$ (180°C) of respective Examples were 15.7 minutes to 31.0 minutes, and the values of $R_{ret}$ were 0.71 to 1.13, satisfying requirement 4.

Fiber-reinforced composite materials were prepared using the constituent elements shown in Tables 5 and 6 in the same manner as in Example 2-0, and when the CAI strength, room temperature and wet heat in-plane shear modulus, room temperature and wet heat ILSS, cold-heat cycle durability, and room temperature and wet heat OHC were evaluated for each example, good physical properties were obtained at all levels, and compressive strength under wet heat environments, impact resistance, and crack resistance after cold-heat cycles were all achieved at high levels. Further, the impregnation times for respective Examples were 9.0 to 18.0 minutes, and excellent impregnation properties were demonstrated in VaRI molding. Furthermore, the surface quality of the molded article was good.

(Examples 2-5, 2-14, and 2-17)

An epoxy resin composition was prepared in the same manner as in Example 2-0. A constituent element [B] was prepared in the same manner as in Example 2-0, except that the thermoplastic resin materials of the constituent element [B] were changed as shown in Tables 5 and 6. As the result that the values of the enthalpy of fusion were measured in the same manner as in Example 2-0, all were 0 J/g, indicating that the material was amorphous. The values of Cd20 (180°C) of respective Example were 16.2 minutes to 21.0 minutes, and the values of $R_{ret}$ were 0.93 to 1.13.

A fiber-reinforced composite material was prepared using the constituent elements listed in Table 5 according to the above-described <Method for molding fiber-reinforced composite material: RTM method>, and when the CAI strength, room temperature and wet heat in-plane shear modulus, room temperature and wet heat ILSS, cold-hot cycle durability, and room temperature and wet heat OHC were evaluated, good physical properties were obtained at all levels. Further, the values of the impregnation time in molding were 4.0 to 6.5 minutes, and excellent impregnation property was shown also in RTM molding. Further,, the surface quality of the molded article was also good.

(Examples 2-12, 2-13, 2-15, and 2-16)

Except for changing the epoxy resin composition as shown in Table 1, an epoxy resin composition was prepared in the same manner as in Example 2-1. Except for changing the thermoplastic resin material of the constituent element [B] as shown in Table 6, a constituent element [B] was prepared in the same manner as in Example 2-1. As the result that the values of the enthalpy of fusion were measured in the same manner as in Example 2-0, all were 0 J/g, indicating that the material was amorphous. The values of the $Cd_{20}$ (180°C) of respective Examples were 16.2 minutes to 17.5 minutes, and the values of the $R_{ret}$ were 0.95 to 1.07.

A fiber-reinforced composite material was prepared using the constituent elements listed in Table 6 in the same manner as in Example 2-0, and when the CAI strength, room temperature and wet heat in-plane shear modulus, room temperature and wet heat ILSS, cold-hot cycle durability, and room temperature and wet heat OHC were evaluated for each Example, good physical properties were obtained at all levels, and the compressive strength under wet heat environments, impact resistance, and crack resistance after cold-hoot cycles were all achieved at high levels. In these Examples, in particular, the wet heat OHC exhibited high performance of 304 to 315 MPa. Furthermore, the values of the wet heat in-plane shear moduli were 4.3 to 4.5 GPa, and the values of the wet heat ILSS was 102 to 105 MPa, showing high shear properties. In addition, the values of the impregnation time of respective Examples were 10.5 to 12.0 minutes, showing excellent impregnation properties in VaRI molding. Further, the surface quality of the molded article was good.

(Comparative Example 2-1)

Composition 4 shown in Table 1 was used as the epoxy resin composition, and PA6/12 (20:80) was used as the thermoplastic resin material of constituent element [B]. The $Cd_{20}$ (180°C) was 31.0 minutes, but the $R_{ret}$ was 0.45, which was outside the range of requirement 3.

A fiber-reinforced composite material was prepared in the same manner as in Example 2-0 using the constituent elements shown in Table 7, and when the CAI strength, room temperature and wet heat in-plane shear modulus, room temperature and wet heat ILSS, cold-hot cycle durability, and room temperature and wet heat OHC were evaluated, the CAI strength was 290 MPa which was excellent, but the wet heat OHC was 215 MPa which was insufficient, the wet heat in-plane shear modulus was 3.0 GPa, and the wet heat ILSS was 60 MPa, which were insufficient. Further, the impregnation time was 24.0 minutes which was long.

(Comparative Example 2-2)

An epoxy resin composition was prepared in the same manner as in Comparative Example 2-1, except that the thermoplastic resin material of the constituent element [B] was PA6/12 (80:20). The $Cd_{20}$ (180°C) was 31.0 minutes, but the $R_{ret}$ was 0.69, which was outside the range of requirement 4.

A fiber-reinforced composite material was prepared in the same manner as in Comparative Example 2-1, except that the constituent element [B] was changed as described above, and when the CAI strength, room temperature and wet heat in-plane shear modulus, room temperature and wet heat ILSS, cold-hot cycle durability, and room temperature and wet heat OHC were evaluated, the CAI strength was 223 MPa which was insufficient, the wet heat OHC was 210 MPa, the wet heat in-plane shear modulus was 3.1 GPa, and the wet heat ILSS was 62 MPa, which were insufficient. Further, the number of cracks generated after the cold-hot cycle durability test was 15 which was many, and the surface quality of the molded article was also rank C.

(Comparative Example 2-3)

Composition 10 shown in Table 1 was used for the epoxy resin composition, and the constituent element [B] was the same material as in Examples 2-6. The value of $R_{ret}$ was 1.10, but the $Cd_{20}$ (180°C) was short at 14.0, which was outside the range of requirement (2).

A fiber-reinforced composite material was prepared in the same manner as in Comparative Example 2-1, and when the CAI strength, room temperature and wet heat in-plane shear modulus, room temperature and wet heat ILSS, cold-hot cycle durability, and room temperature and wet heat OHC were evaluated, the CAI strength was 200 MPa which was insufficient, and the wet heat OHC was 230 MPa which was insufficient. In addition, the number of cracks generated after the cold-hot cycle durability test was 13 which was many.

(Comparative Example 2-4)

The epoxy resin composition and the constituent element [B] were the constituent elements described in Example 1 of Patent document 1 (WO 2022/149591). The value of $R_{ret}$ was 1.07, but the $Cd_{20}$ (180°C) was short at 3.0, which was outside the range of requirement (2).

A fiber-reinforced composite material was prepared in the same manner as in Comparative Example 2-1, and when the CAI strength, room temperature and wet heat ILSS, room temperature and wet heat in-plane shear modulus, cold-hot cycle durability, and room temperature and wet heat OHC were evaluated, the CAI strength was good at 250 MPa, but the wet heat OHC strength was 230 MPa, the wet heat in-plane shear modulus was 3.2 GPa, and the wet heat ILSS was 58 MPa, which were insufficient. In addition, the Vf was 54% which was low.

(Comparative Example 2-5)

Composition 7 shown in Table 1 was used for the epoxy resin composition, and the constituent element [B] was the same material as in Examples 2-3. The value of $R_{ret}$ was 1.20, but the $Cd_{20}$ (180°C) was long at 47.5, which was outside the range of requirement (2).
A fiber-reinforced composite material was prepared in the same manner as in Comparative Example 2-1, and when the CAI strength, room temperature and wet heat in-plane shear modulus, room temperature and wet heat ILSS, cold-hot cycle durability, and room temperature and wet heat OHC were evaluated, the CAI strength was high at 280 MPa, but the wet heat OHC was 210 MPa the wet heat in-plane shear modulus was 3.0 GPa, and the wet heat ILSS strength was 55 MPa, which were insufficient. Further, the surface quality of the molded article was rank C which was low.

(Comparative Example 2-6)

Composition 9 shown in Table 1 was used for the epoxy resin composition, and the constituent element [B] was the same material as in Example 2-6. The value of $R_{ret}$ was 0.95, but the $Cd_{20}$ (180°C) was 6.7, which was outside the range of requirement (2).
A fiber-reinforced composite material was prepared in the same manner as in Comparative Example 2-1, and when the CAI strength, room temperature and wet heat in-plane shear modulus, room temperature and wet heat ILSS, cold-hot cycle durability, and room temperature and wet heat OHC were evaluated, the CAI strength was 200 MPa, which was significantly insufficient, the wet heat OHC was 215 MPa, the wet heat in-plane shear modulus was 3.3 GPa, and the wet heat ILSS strength was 65 MPa, all of which were insufficient. Further, the surface quality of the molded article was rank C which was low.

(Example 3-0)

An epoxy resin composition was prepared according to the above-described <Method for preparing epoxy resin composition> using 100 parts by mass of "Sumiepoxy (registered trademark)" ELM-434VL (constituent element [C]), 9.5 parts by mass of "KAYAHARD (registered trademark)" A-A (constituent element [D]), and 66.4 parts by mass of "Lonzacure (registered trademark)" M-CDEA (constituent element [D]) as the epoxy resin main ingredient. When the $Cd_{20}$ (180°C) of this epoxy resin composition was evaluated according to the above-described <Method for evaluating $Cd_{20}$ (180°C) of epoxy resin composition>, it was 21.0 minutes.
According to the above-described <Method for preparing thermoplastic resin material> and <Method for manufacturing non-woven fabric>, a non-woven fabric comprising PA6I with an areal weight (Wb) of 5 g/m$^2$ was prepared. The enthalpy of fusion measured according to the above-described <Method for measuring enthalpy of fusion of thermoplastic resin material> was 0 J/g, and the resin was amorphous. When the average fiber diameter (Df) was measured according to the above-described <Method for observing fiber diameter of non-woven fabric>, it was 40 $\mu$m , and the value of Wb/Df was 0.13.
A unidirectional sheet of reinforcing fiber base material (constituent element [A]) was prepared according to the above-described <Method for manufacturing reinforcing fiber base material> using "TORAYCA (registered trademark)" T800G-24K-71E as reinforcing fibers, a layered body for compressive stress testing was prepared according to the above-described <Method for manufacturing layered body>, and when the compressive stress was measured according to the above-described <Compressive stress test method>, the $\sigma$160 was 0.25 MPa, $\sigma$190 was 0.52 MPa, and $\sigma$190/$\sigma$160 was 0.48, which were outside the range of requirement 5.
A layered body was prepared according to the above-described <Method for manufacturing layered body>, and molded articles for CAI evaluation, OHC evaluation, ILSS evaluation, and cold-hot cycle durability test were prepared at a curing temperature of 180°C according to the above-described <Method for molding fiber-reinforced composite material: VaRI method>.
When the obtained molded article was evaluated according to the above-described CAI test method, room temperature OHC test method, wet heat OHC test method, room temperature ILSS test method, wet heat ILSS test method, and cold-hot cycle durability test method, it showed excellent impact resistance and compression properties, with a CAI strength of 265 MPa , a room temperature OHC strength of 285 MPa, and a wet heat OHC strength of 255 MPa. Further, the room temperature ILSS strength and wet heat ILSS strength were 105 MPa and 82 MPa, respectively, and the number of cracks after the cold-hot cycle durability test was 3, which was excellent.
Further, when the surface quality of the molded article was evaluated according to the above-described <Method for evaluating surface quality and interlayer thickness>, it was rank B which was good. The impregnation time measured according to the above-described <Method for measuring impregnation time and fiber volume content> was 21.0 minutes, indicating an excellent impregnation property. Furthermore, the Vf of this molded article was 59.5%.

(Examples 3-2 to 3-4, 3-6 to 3-12, 3-14, and 3-15)

Except for changing the composition of the epoxy resin as shown in Table 1, an epoxy resin composition was prepared in the same manner as in Example 3-0. Except for changing the thermoplastic resin material and areal weight of the constituent element [B] as shown in Tables 8 and 9, a constituent element [B] was prepared in the same manner as in Example 3-0. As the result of measuring the enthalpy of fusion in the same manner as in Example 3-0, all were 0 J/g, and the materials were amorphous. Except for changing the kind of reinforcing fiber of the constituent element [A], the form of the reinforcing fiber base material, and the areal weight as shown in Tables 8 and 9, a layered body for compression test was prepared using the constituent elements described in Tables 8 and 9 in the same manner as in Example 3-1. The values of $Cd_{20}$ (180°C) of respective Examples were 15.7 minutes to 31.0 minutes, and the values of $\sigma 190/\sigma 160$ were 0.54 to 0.84, which satisfied requirement 5.

When fiber-reinforced composite materials were prepared using constituent elements described in Tables 8 and 9 in the same manner as in Example 3-0, and the CAI strength, room temperature and wet heat ILSS, cold-hot cycle durability, and room temperature and wet heat OHC were evaluated for each Example, good physical properties were obtained at all levels, and the compressive strength under wet heat environments, impact resistance, and crack resistance after cold-hot cycles were all achieved at high levels. Further, the impregnation times for respective Examples were 9.0 to 18.0 minutes, and excellent impregnation property was demonstrated in VaRI molding. Furthermore, the surface quality of the molded article was good.

(Examples 3-5, 3-13, 3-16 to 3-19)

Except for changing the epoxy resin composition as shown in Table 1, an epoxy resin composition was prepared in the same manner as in Example 3-0. Except for changing the thermoplastic resin material of the constituent element [B] as shown in Tables 8 and 9, a constituent element [B] was prepared in the same manner as in Example 3-0. As the result that the enthalpy of fusion was measured in the same manner as in Example 3-0, all were 0 J/g, which were amorphous materials. Except for changing the kind of reinforcing fiber of the constituent element [A], the form of the reinforcing fiber base material, and the areal weight as shown in Tables 8 and 9, a layered body for compression test was prepared using the constituent elements described in Tables 8 and 9 in the same manner as in Example 3-1. The values of $Cd_{20}$ (180°C) of respective Examples were 16.2 minutes to 18.3 minutes, and the values of $\sigma 190/\sigma 160$ were 0.68 to 0.84.

Fiber-reinforced composite materials were prepared using the constituent elements listed in Tables 8 and 9 according to the above-described <Method for molding fiber-reinforced composite material: RTM method>, and when the CAI strength, room temperature and wet heat ILSS, cold-hott cycle durability, and room temperature and wet heat OHC of each Example were evaluated, good physical properties were obtained at all levels. Further the impregnation times of respective Examples were 5.0 to 6.5 minutes, and excellent impregnation property was shown also in RI molding. Furthermore, the surface quality of the molded article was good.

(Comparative Example 3-1)

Composition 4 shown in Table 1 was used for the epoxy resin composition, and "Spunfab (registered trademark)" PA1206 (supplied by Spunfab Ltd.), a crystalline non-woven fabric, was used as constituent element [B]. The $Cd_{20}$ (180°C) was 31.0 minutes, but the value of $\sigma 190/\sigma 160$ was 0.30, which was outside the range of requirement (5).

A fiber-reinforced composite material was prepared in the same manner as in Example 3-0 using the constituent elements shown in Table 10, and when the CAI strength, room temperature and wet heat ILSS, cold-hot cycle durability, and room temperature and wet heat OHC were evaluated, the CAI strength was excellent at 290 MPa, but the wet heat OHC was 215 MPa which was insufficient. Further, the impregnation time was 24.0 minutes which was long.

(Comparative Example 3-2)

An epoxy resin composition similar to that of Comparative Example 3-1 was prepared, except that the constituent element [B] was "Spunfab (registered trademark)" PA1209 (supplied by Spunfab Ltd.). The $Cd_{20}$ (180°C) was 31.0 minutes, but the value of $\sigma 190/\sigma 160$ was 0.47, which was outside the range of requirement (5).

A fiber-reinforced composite material was prepared in the same manner as in Comparative Example 3-1, except that the constituent element [B] was changed as described above, and when the CAI strength, room temperature and wet heat ILSS, cold-hot cycle durability, and room temperature and wet heat OHC were evaluated, the CAI strength was 223 MPa which was insufficient, and the wet heat OHC was210 MPa which was insufficient. Further, the number of cracks generated after the cold-hot cycle durability test was 15 which was many, and the surface quality of the molded article was also rank C.

(Comparative Example 3-3)

Composition 10 shown in Table 1 was used for the epoxy resin composition, and the constituent element [B] was the same material as in Examples 3-6. The value of $\sigma190/\sigma160$ was 0.81, but the $Cd_{20}$ (180°C) was short at 14.0, which was outside the range of requirement (2).
A fiber-reinforced composite material was prepared in the same manner as in Comparative Example 3-1, and when the CAI strength, room temperature and wet heat ILSS, cold-hot cycle durability, and room temperature and wet heat OHC were evaluated, the CAI strength was 200 MPa which was insufficient, and the wet heat OHC was 230 MPa which was insufficient. Further, the number of cracks generated after the cold-hot cycle durability test was 13 which was many.

(Comparative Example 3-4)

The epoxy resin composition and the constituent element [B] were the constituent elements described in Example 1 of Patent document 1 (WO 2022/149591). The valuue of $\sigma190/\sigma160$ was 0.81, but the $Cd_{20}$ (180°C) was short at 3.0, which was outside the range of requirement (2).
A fiber-reinforced composite material was prepared in the same manner as in Comparative Example 3-1, and when the CAI strength, room temperature and wet heat ILSS, cold-hot cycle durability, and room temperature and wet heat OHC were evaluated, the CAI strength was 250 MPa which was good, but the wet heat OHC strength was 230 MPa which was insufficient. Further, the Vf was 54% which was low.

(Comparative Example 3-5)

Composition 7 shown in Table 1 was used for the epoxy resin composition, and the constituent element [B] was the same as in Example 3-3. The value of $\sigma190/\sigma160$ was 0.81, but the $Cd_{20}$ (180°C) was long at 47.5, which was outside the range of requirement (2).
A fiber-reinforced composite material was prepared in the same manner as in Comparative Example 3-1, and when the CAT strength, room temperature and wet heat ILSS, cold-hot cycle durability, and room temperature and wet heat OHC were evaluated, the CAI strength was 280 MPa which was high, but the wet heat OHC was 210 MPa and the wet heat ILSS strength was 55 MPa, which were insufficient. Further, the surface quality of the molded article rank C which was low.

(Comparative Example 3-6)

Composition 9 shown in Table 1 was used for the epoxy resin composition, and the constituent element [B] was the same material as in Examples 3-6. The value of $\sigma190/\sigma160$ was 0.81, but the $Cd_{20}$ (180°C) was 6.7, which was outside the range of requirement (2).
A fiber-reinforced composite material was prepared in the same manner as in Comparative Example 3-1, and when the CAT strength, room temperature and wet heat ILSS, cold-hot cycle durability, and room temperature and wet heat OHC were evaluated, the CAI strength was significantly insufficient at 200 MPa, and the wet heat OHC was 215 MPa which was insufficient. Further, the surface quality of the molded article was rank C which was low.

[Table 1]

| | Raw materials of epoxy resin composition | | Composition 1 | Composition 2 | Composition 3 | Composition 4 | Composition 5 | Composition 6 | Composition 7 | Composition 8 | Composition 9 | Composition 10 | Composition 11 |
|---|---|---|---|---|---|---|---|---|---|---|---|---|---|
| [C] Epoxy resin main ingredient | "Sumiepoxy ®"ELM-434VL | TGDDM | 100 | 80 | 40 | 65 | 25 | 25 | 100 | 50 | 100 | 100 | 40 |
| | GAN | glycidyl aniline | | | | | | | | | | | 15 |
| | "TOREP®"A-204E | diglycidyl-p-phenoxy aniline | | | 20 | | 30 | 30 | | 50 | | | |
| | "EPICLON®"HP-7200L | dicyclopentadiene type epoxy resin | | | 25 | | | 30 | | | | | |
| | "EPICLON®"HP-7200II | | | | | | 30 | | | | | | |
| | "jER®"825 | bisphenol A type epoxy resin | | | | | | | | | | | 35 |
| | "EPICLON®"830 | bisphenol F type epoxy resin | | 20 | | 20 | | | | | | | |
| | "jER®"630 | TGpAP | | | | | | | | | | | 10 |
| Mixture of core-shell type rubber particles and epoxy resin | "Kane Ace ®"MX-414 masterbatch compounded with 25 wt% of core-shell type rubber particles | core-shell type rubber particles (constituent element [E]) | | | 5 | 5 | 5 | 5 | | | | | |
| | | tetrafunctional glycidyl amine type epoxy resin (constituent element C]) | | | 15 | 15 | 15 | 15 | | | | | |
| [D] Amine compound | "Ethacure®"300 | dimethylthiotoluenediamine | | | 41.6 | | 25.7 | 22.8 | | | | | |
| | "jER Cure ®"WA | diethyltoluenediamine | | | | | 7.2 | | | | 38.8 | | 70.0 |
| | "Lonzacure®" M-MIPA | 4,4'-methylenebis(2-isopropyl-6-methylaniline) | | 70.0 | | 11.0 | | 21.9 | | 39.8 | | 25.0 | |
| | "KAYAHARD®" A-A | 4,4'-methylenebis(2-diethylaniline) | 9.5 | | | | | | | | | | |
| | "Lonzacure®" M-DEA | 4,4'-methylenebis(2,6-diethylaniline) | | | | | | | | | | 41.7 | |
| | "Lonzacure®" M-DIPA | 4,4'-methylenebis(2,6-diisopropylaniline) | | | | 13.0 | | | | | | | |
| | "Lonzacure®" M-CDEA | 4,4'-methylenebis(3-chloro-2,6-diethylaniline) | 66.4 | | | 61.0 | | | 82.5 | | | | |
| | SEIKACURE-S | 4,4'-DDS | | | | | | | | | | | 10.0 |
| | 3,3'-DAS | 3,3'-DDS | | | | | | | | | | | 20.0 |
| Other additives | DIC-TBC | t-butylcatechol | | | | | | | | | | | 2.0 |

22

[Table 2]

| | | Example 1-0 | Example 1-1 | Example 1-2 | Example 1-3 | Example 1-4 | Example 1-5 | Example 1-6 | Example 1-7 | Example 1-8 | Example 1-9 |
|---|---|---|---|---|---|---|---|---|---|---|---|
| Constituent element [A]: reinforcing fiber base material | Kind of reinforcing fiber | T800G | T800G | T800G | T800G | T800G | T800G | T800G | T800G | T800G | T800G |
| | Form of reinforcing fiber base material | unidirectional sheet | unidirectional sheet | unidirectional sheet | unidirectional sheet | unidirectional sheet | unidirectional sheet | unidirectional sheet | unidirectional sheet | unidirectional sheet | unidirectional sheet |
| | Areal weight: Wh (g/m²) | 300 | 300 | 300 | 300 | 300 | 300 | 300 | 300 | 300 | 300 |
| | Kind of resin material constituting non-woven fabric | PA6I/12 | PA6I | PA6I/610 | TR55 | TR30 | TR55 | TR90 | TR90 | TR90 | TR90 |
| | Enthalpy of fusion of non-woven fabric (J/g) | 0 | 0 | 0 | 0 | 0 | 0 | 0 | 0 | 0 | 0 |
| Constituent element [B]: non-woven fabric | Load deflection temperature of resin material constituting non-woven fabric (°C) | 55 | 90 | 65 | 130 | 125 | 130 | 115 | 115 | 115 | 115 |
| | Areal weight: Wh (g/m²) | 5 | 5 | 5 | 5 | 5 | 5 | 6 | 6 | 6 | 6 |
| | Fiber diameter: Df (μm) | 40 | 40 | 40 | 40 | 15 | 40 | 14 | 34 | 14 | 34 |
| | Wh/Df | 0.13 | 0.13 | 0.13 | 0.13 | 0.33 | 0.13 | 0.43 | 0.18 | 0.43 | 0.18 |
| Epoxy resin composition (mixture of constituent elements [C], [D] and other additives) | | Composition 1 | Composition 1 | Composition 1 | Composition 1 | Composition 1 | Composition 1 | Composition 2 | Composition 2 | Composition 3 | Composition 3 |
| Requirement (2): time reaching degree of cure of 20% at 180°C (Cd20(180°C))(min.) | | 21.0 | 21.0 | 21.0 | 21.0 | 21.0 | 21.0 | 15.7 | 15.7 | 23.3 | 23.3 |
| Requirement (3): (Rexp(190°C)-Rexp(170°C))·5 | | 6.00 | 4.75 | 3.00 | 0.95 | 0.95 | 0.85 | 1.00 | 4.42 | 0.75 | 4.83 |
| Rexp(170°C) | | 1.05 | 1.05 | 1.10 | 1.05 | 1.05 | 1.05 | 1.10 | 1.10 | 1.10 | 1.10 |
| Rexp(190°C) | | 2.25 | 2.00 | 1.70 | 1.24 | 1.24 | 1.22 | 1.15 | 1.85 | 1.25 | 2.07 |
| Molding method of CFRP | Molding method | VaRI | VaRI | VaRI | VaRI | VaRI | RTM | VaRI | VaRI | VaRI | VaRI |
| | Molding temperature (°C) | 180 | 180 | 180 | 180 | 180 | 180 | 180 | 180 | 180 | 180 |
| | Injection pressure (MPa) | 0.1 | 0.1 | 0.1 | 0.1 | 0.1 | 0.3 | 0.1 | 0.1 | 0.1 | 0.1 |
| | Mold pressure (MPa) | 0.1 | 0.1 | 0.1 | 0.1 | 0.1 | 1.5 | 0.1 | 0.1 | 0.1 | 0.1 |
| | Vf (%) | 59.5 | 59.0 | 59.0 | 58.0 | 58.0 | 58.0 | 59.0 | 58.0 | 59.0 | 58.0 |
| Result of molding of fiber-reinforced composite material | Impregnation time (min.) | 21.0 | 18.0 | 15.0 | 18.0 | 9.0 | 5.0 | 11.0 | 13.0 | 10.0 | 12.0 |
| | Surface quality | B | B | B | A | A | B | A | B | A | B |
| | CF interlayer thickness: Ti (μm) | 22 | 22 | 21 | 60 | 42 | 39 | 19 | 45 | 20 | 40 |
| | Ti/Df | 0.55 | 0.55 | 0.53 | 1.50 | 2.80 | 0.98 | 1.36 | 1.32 | 1.43 | 1.18 |
| Property of fiber-reinforced composite material | CAI strength (MPa) | 265 | 260 | 270 | 285 | 270 | 287 | 270 | 275 | 295 | 300 |
| | CAI damage area (mm²) | 680 | 650 | 640 | 430 | 580 | 490 | 450 | 620 | 400 | 510 |
| | Room temperature OHC strength (MPa) | 285 | 285 | 282 | 290 | 295 | 305 | 289 | 292 | 300 | 320 |
| | Wet heat OHC strength (MPa) | 255 | 275 | 270 | 280 | 283 | 295 | 280 | 285 | 288 | 299 |
| | Room temperature ILSS strength (MPa) | 105 | 102 | 100 | 105 | 110 | 107 | 110 | 112 | 105 | 110 |
| | Wet heat ILSS strength (MPa) | 82 | 90 | 87 | 90 | 93 | 91 | 95 | 96 | 95 | 97 |
| | Number of cracks after cold-hot cycle durability test (number) | 3 | 1 | 2 | 1 | 0 | 0 | 0 | 0 | 0 | 0 |

[Table 3]

| | | Example 1-10 | Example 1-11 | Example 1-12 | Example 1-13 | Example 1-14 | Example 1-15 | Example 1-16 | Example 1-17 |
|---|---|---|---|---|---|---|---|---|---|
| Constituent element [A]: reinforcing fiber base material | Kind of reinforcing fiber | T800G | T800G | T800G | T800G | T800G | T800G | T800G | T800G |
| | Form of reinforcing fiber base material | unidirectional sheet | unidirectional sheet | unidirectional sheet | unidirectional sheet | unidirectional sheet | unidirectional sheet | unidirectional sheet | unidirectional sheet |
| | Areal weight: Wb (g/m$^2$) | 300 | 300 | 300 | 300 | 300 | 300 | 300 | 300 |
| Constituent element [B]: non-woven fabric | Kind of resin material constituting non-woven fabric | TR90 | TR90 | TR55 | TR90 | TR90 | TR55 | TR90 | TR90 |
| | Enthalpy of fusion of non-woven fabric (J/g) | 0 | 0 | 0 | 0 | 0 | 0 | 0 | 0 |
| | Load deflection temperature of resin material constituting non-woven fabric (°C) | 115 | 115 | 130 | 115 | 115 | 130 | 115 | 115 |
| | Areal weight: Wb (g/m$^2$) | 6 | 6 | 6 | 6 | 6 | 6 | 6 | 6 |
| | Fiber diameter: Df (μm) | 14 | 34 | 14 | 14 | 14 | 14 | 14 | 14 |
| | Wb/Df | 0.43 | 0.18 | 0.43 | 0.43 | 0.43 | 0.43 | 0.43 | 0.43 |
| Epoxy resin composition (mixture of constituent elements [C], [D] and other additives) | | Composition 4 | Composition 4 | Composition 5 | Composition 5 | Composition 5 | Composition 6 | Composition 6 | Composition 6 |
| Requirement (2): time reaching degree of cure of 20% at 180°C (Cd20(180°C)) (min.) | | 31.0 | 31.0 | 16.2 | 16.2 | 16.2 | 17.5 | 17.5 | 17.5 |
| Requirement (3): (Rexp(190°C)-Rexp(170°C))×5 | | 0.85 | 4.50 | 0.77 | 2.92 | 2.92 | 3.75 | 3.40 | 3.40 |
| Rexp(170°C) | | 1.10 | 1.10 | 1.05 | 1.12 | 1.12 | 1.05 | 1.12 | 1.12 |
| Rexp(190°C) | | 1.27 | 2.00 | 1.20 | 1.70 | 1.70 | 1.80 | 1.80 | 1.80 |
| Molding method of CFRP | Molding method | VaRI | VaRI | VaRI | VaRI | RTM | VaRI | VaRI | RTM |
| | Molding temperature (°C) | 180 | 180 | 180 | 180 | 180 | 180 | 180 | 180 |
| | Injection pressure (MPa) | 0.1 | 0.1 | 0.1 | 0.1 | 0.3 | 0.1 | 0.1 | 0.3 |
| | Mold pressure (MPa) | 0.1 | 0.1 | 0.1 | 0.1 | 1.5 | 0.1 | 0.1 | 1.5 |
| Result of molding of fiber-reinforced composite material | Vf (%) | 59.0 | 58.0 | 58.0 | 59.0 | 58.0 | 58.0 | 59.0 | 58.0 |
| | Impregnation time (min.) | 15.0 | 12.0 | 10.5 | 12.0 | 4.0 | 10.5 | 12.0 | 6.5 |
| | Surface quality | A | B | A | A | A | A | A | A |
| | CF interlayer thickness: Ti (μm) | 20 | 38 | 19 | 20 | 15 | 19 | 21 | 14 |
| | Ti/Df | 1.43 | 1.12 | 1.36 | 1.43 | 1.07 | 1.36 | 1.50 | 1.00 |
| Property of fiber-reinforced composite material | CAI strength (MPa) | 310 | 312 | 310 | 307 | 311 | 312 | 307 | 311 |
| | CAI damage area (mm$^2$) | 400 | 460 | 370 | 350 | 310 | 360 | 370 | 313 |
| | Room temperature OHC strength (MPa) | 290 | 310 | 320 | 317 | 320 | 317 | 320 | 327 |
| | Wet heat OHC strength (MPa) | 270 | 285 | 304 | 305 | 310 | 310 | 315 | 310 |
| | Room temperature ILSS strength (MPa) | 105 | 107 | 119 | 115 | 114 | 119 | 115 | 115 |
| | Wet heat ILSS strength (MPa) | 90 | 92 | 105 | 104 | 105 | 105 | 102 | 103 |
| | Number of cracks after cold-hot cycle durability test (number) | 0 | 0 | 0 | 0 | 0 | 0 | 0 | 0 |

24

[Table 4]

EP 4 663 689 A1

| | | Comparative Example 1-1 | Comparative Example 1-2 | Comparative Example 1-3 | Comparative Example 1-4 | Comparative Example 1-5 | Comparative Example 1-6 |
|---|---|---|---|---|---|---|---|
| Constituent element [A]: reinforcing fiber base material | Kind of reinforcing fiber | T800G | T800G | T800G | T800G | T800G | T800G |
| | Form of reinforcing fiber base material | unidirectional sheet | unidirectional sheet | unidirectional sheet | unidirectional sheet | unidirectional sheet | unidirectional sheet |
| | Areal weight: Wb (g/m$^2$) | 300 | 300 | 300 | 300 | 300 | 300 |
| Constituent element [B]: non-woven fabric | Kind of resin material constituting non-woven fabric | PA1206 | PA1209 | TR55 | TR90 | TR55 | TR90 |
| | Enthalpy of fusion of non-woven fabric (J/g) | 38.6 | 38.5 | 0 | 0 | 0 | 0 |
| | Load deflection temperature of resin material constituting non-woven fabric (°C) | 45 | 135 | 115 | 115 | 115 | 115 |
| | Areal weight: Wb (g/m$^2$) | 6 | 5 | 6 | 6 | 6 | 6 |
| | Fiber diameter: Df (μm) | 14 | 40 | 14 | 34 | 14 | 14 |
| | Wb/Df | 0.43 | 0.13 | 0.43 | 0.18 | 0.43 | 0.43 |
| Epoxy resin composition (mixture of constituent elements [C], [D] and other additives) | | Composition 4 | Composition 4 | Composition 10 | Composition 11 | Composition 7 | Composition 9 |
| Requirement (2): time reaching degree of cure of 20% at 180°C (Cd20(180°C)) (min.) | | 31.0 | 31.0 | 14.0 | 3.0 | 47.5 | 6.7 |
| Requirement (3): (Rexp(190°C)-Rexp(170°C))×5 | | 7.00 | 0.25 | 0.60 | 0.40 | 3.00 | 0.15 |
| Rexp(170°C) | | 1.1 | 1 | 1.00 | 1.00 | 1.20 | 1.00 |
| Rexp(190°C) | | 2.5 | 1.05 | 1.12 | 1.08 | 1.80 | 1.03 |
| Molding method of CFRP | Molding method | VaRI | VaRI | VaRI | VaRI | VaRI | VaRI |
| | Molding temperature (°C) | 180 | 180 | 180 | 180 | 180 | 180 |
| | Injection pressure (MPa) | 0.1 | 0.1 | 0.1 | 0.1 | 0.1 | 0.1 |
| | Mold pressure (MPa) | 0.1 | 0.1 | 0.1 | 0.1 | 0.1 | 0.1 |
| Result of molding of fiber-reinforced composite material | Vf (%) | 58.0 | 57.0 | 57.0 | 54.0 | 58.0 | 57.0 |
| | Impregnation time (min.) | 24.0 | 12.0 | 12.0 | 15.0 | 20.0 | 17.0 |
| | Surface quality | B | C | A | B | C | C |
| | CF interlayer thickness: Ti (μm) | 20 | 54 | 15 | 50 | 26 | 24 |
| | Ti/Df | 1.43 | 1.35 | 1.07 | 1.47 | 1.86 | 1.71 |
| Property of fiber-reinforced composite material | CAI strength (MPa) | 290 | 223 | 200 | 250 | 280 | 200 |
| | CAI damage area (mm$^2$) | 750 | 810 | 850 | 900 | 500 | 910 |
| | Room temperature OHC strength (MPa) | 285 | 280 | 275 | 280 | 280 | 275 |
| | Wet heat OHC strength (MPa) | 215 | 210 | 230 | 230 | 210 | 215 |
| | Room temperature ILSS strength (MPa) | 95 | 100 | 95 | 94 | 93 | 95 |
| | Wet heat ILSS strength (MPa) | 60 | 62 | 65 | 58 | 55 | 65 |
| | Number of cracks after cold-hot cycle durability test (number) | 3 | 15 | 13 | 3 | 2 | 40 |

25

[Table 5]

| | | Example 2-0 | Example 2-1 | Example 2-2 | Example 2-3 | Example 2-4 | Example 2-5 | Example 2-6 | Example 2-7 | Example 2-8 | Example 2-9 |
|---|---|---|---|---|---|---|---|---|---|---|---|
| Constituent element [A]: reinforcing fiber base material | Kind of reinforcing fiber | T800G | T800G | T800G | T800G | T800G | T800G | T800G | T800G | T800G | T800G |
| | Form of reinforcing fiber base material | unidirectional sheet | unidirectional sheet | unidirectional sheet | unidirectional sheet | unidirectional sheet | unidirectional sheet | unidirectional sheet | unidirectional sheet | unidirectional sheet | unidirectional sheet |
| | Areal weight: Wb (g/m$^2$) | 300 | 300 | 300 | 300 | 300 | 300 | 300 | 300 | 300 | 300 |
| Constituent element [B]: non-woven fabric | Kind of resin material constituting non-woven fabric | PA6I/12 | PA6I | PA6I/610 | TR55 | TR30 | TR55 | TR90 | TR90 | TR90 | TR90 |
| | Enthalpy of fusion of non-woven fabric (J/g) | 0 | 0 | 0 | 0 | 0 | 0 | 0 | 0 | 0 | 0 |
| | Load deflection temperature of resin material constituting non-woven fabric (°C) | 55 | 90 | 65 | 130 | 125 | 130 | 115 | 115 | 115 | 115 |
| | Areal weight: Wb (g/m$^2$) | 5 | 5 | 5 | 5 | 5 | 5 | 6 | 6 | 6 | 6 |
| | Fiber diameter: Df (μm) | 40 | 40 | 40 | 40 | 15 | 40 | 14 | 34 | 14 | 34 |
| | Wb/Df | 0.13 | 0.13 | 0.13 | 0.13 | 0.33 | 0.13 | 0.43 | 0.18 | 0.43 | 0.18 |
| Epoxy resin composition (mixture of constituent elements [C], [D] and other additives) | | Composition 1 | Composition 1 | Composition 1 | Composition 1 | Composition 1 | Composition 1 | Composition 2 | Composition 2 | Composition 3 | Composition 3 |
| Requirement (2): time reaching degree of cure of 20% at 180°C (Cd20(180°C)) (min.) | | 21.0 | 21.0 | 21.0 | 21.0 | 21.0 | 21.0 | 15.7 | 15.7 | 23.3 | 23.3 |
| Requirement (4):$R_{ret}$ = (B82/B25)/(E82/E25) | | 0.61 | 0.76 | 0.71 | 1.13 | 1.03 | 1.13 | 1.08 | 1.08 | 0.95 | 0.95 |
| B25 (Gpa) | | 2.20 | 2.00 | 2.10 | 2.05 | 2.55 | 2.05 | 1.59 | 1.59 | 1.59 | 1.59 |
| B82 (GPa) | | 1.10 | 1.25 | 1.22 | 1.91 | 2.15 | 1.91 | 1.29 | 1.29 | 1.29 | 1.29 |
| E25 (GPa) | | 3.83 | 3.83 | 3.83 | 3.83 | 3.83 | 3.83 | 4.20 | 4.20 | 3.99 | 3.99 |
| E82 (GPa) | | 3.15 | 3.15 | 3.15 | 3.15 | 3.15 | 3.15 | 3.15 | 3.15 | 3.41 | 3.41 |
| Molding method of CFRP | Molding method | VaRI | VaRI | VaRI | VaRI | VaRI | RTM | VaRI | VaRI | VaRI | VaRI |
| | Molding temperature (°C) | 180 | 180 | 180 | 180 | 180 | 180 | 180 | 180 | 180 | 180 |
| | Injection pressure (MPa) | 0.1 | 0.1 | 0.1 | 0.1 | 0.1 | 0.3 | 0.1 | 0.1 | 0.1 | 0.1 |
| | Mold pressure (MPa) | 0.1 | 0.1 | 0.1 | 0.1 | 0.1 | 1.5 | 0.1 | 0.1 | 0.1 | 0.1 |
| Result of molding of fiber-reinforced composite material | Vf (%) | 59.5 | 59.0 | 59.0 | 58.0 | 58.0 | 58.0 | 59.0 | 58.0 | 59.0 | 58.0 |
| | Impregnation time (min.) | 21.0 | 18.0 | 15.0 | 18.0 | 9.0 | 5.0 | 11.0 | 13.0 | 10.0 | 12.0 |
| | Surface quality | B | B | B | A | A | B | A | B | A | B |
| | CF interlayer thickness: Ti (μm) | 22 | 22 | 21 | 60 | 42 | 39 | 19 | 45 | 20 | 40 |
| | Ti/Df | 0.55 | 0.55 | 0.53 | 1.50 | 2.80 | 0.98 | 1.36 | 1.32 | 1.43 | 1.18 |
| Property of fiber-reinforced composite material | CAI strength (MPa) | 265 | 260 | 270 | 285 | 270 | 287 | 270 | 275 | 295 | 300 |
| | CAI damage area (mm$^2$) | 680 | 650 | 640 | 430 | 580 | 490 | 450 | 620 | 400 | 510 |
| | Room temperature OHC strength (MPa) | 285 | 285 | 282 | 290 | 295 | 305 | 289 | 292 | 300 | 320 |
| | Wet heat OHC strength (MPa) | 255 | 275 | 270 | 280 | 283 | 295 | 280 | 285 | 288 | 299 |
| | Room temperature in-plane shear modulus (GPa) | 5.0 | 4.8 | 4.8 | 4.9 | 5.1 | 4.9 | 5.0 | 5.2 | 5.0 | 5.1 |
| | Wet heat in-plane shear modulus (GPa) | 3.5 | 3.8 | 3.7 | 3.8 | 4.0 | 3.8 | 4.1 | 4.3 | 4.0 | 4.2 |
| | Room temperature ILSS strength (MPa) | 105 | 102 | 100 | 105 | 110 | 107 | 110 | 112 | 105 | 110 |
| | Wet heat ILSS strength (MPa) | 82 | 90 | 87 | 90 | 93 | 91 | 95 | 96 | 95 | 97 |
| | Number of cracks after cold-hot cycle durability test (number) | 3 | 1 | 2 | 1 | 0 | 0 | 0 | 0 | 0 | 0 |

[Table 6]

| | | Example 2-10 | Example 2-11 | Example 2-12 | Example 2-13 | Example 2-14 | Example 2-15 | Example 2-16 | Example 2-17 |
|---|---|---|---|---|---|---|---|---|---|
| Constituent element [A]: reinforcing fiber base material | Kind of reinforcing fiber | T800G | T800G | T800G | T800G | T800G | T800G | T800G | T800G |
| | Form of reinforcing fiber base material | unidirectional sheet | unidirectional sheet | unidirectional sheet | unidirectional sheet | unidirectional sheet | unidirectional sheet | unidirectional sheet | unidirectional sheet |
| | Areal weight: Wb (g/m²) | 300 | 300 | 300 | 300 | 300 | 300 | 300 | 300 |
| | Kind of resin material constituting non-woven fabric | TR90 | TR90 | TR55 | TR90 | TR90 | TR55 | TR90 | TR90 |
| | Enthalpy of fusion of non-woven fabric (J/g) | 0 | 0 | 0 | 0 | 0 | 0 | 0 | 0 |
| Constituent element [B]: non-woven fabric | Load deflection temperature of resin material constituting non-woven fabric (°C) | 115 | 115 | 130 | 115 | 115 | 130 | 115 | 115 |
| | Areal weight: Wb (g/m²) | 6 | 6 | 6 | 6 | 6 | 6 | 6 | 6 |
| | Fiber diameter: Df (μm) | 14 | 34 | 14 | 14 | 14 | 14 | 14 | 14 |
| | Wb/Df | 0.43 | 0.18 | 0.43 | 0.43 | 0.43 | 0.43 | 0.43 | 0.43 |
| | Epoxy resin composition (mixture of constituent elements [C], [D] and other additives) | Composition 4 | Composition 4 | Composition 5 | Composition 5 | Composition 5 | Composition 6 | Composition 6 | Composition 6 |
| | Requirement (2): time reaching degree of cure of 20% at 180°C (Cd20(180°C)) (min.) | 31.0 | 31.0 | 16.2 | 16.2 | 16.2 | 17.5 | 17.5 | 17.5 |
| | Requirement (4): $R_{ref}$ = (B82/B25)/(E82/E25) | 1.01 | 1.01 | 1.07 | 0.93 | 0.93 | 1.09 | 0.95 | 0.95 |
| | B25 (Gpa) | 1.59 | 1.59 | 2.05 | 1.59 | 1.59 | 2.05 | 1.59 | 1.59 |
| | B82 (GPa) | 1.29 | 1.29 | 1.91 | 1.29 | 1.29 | 1.91 | 1.29 | 1.29 |
| | E25 (GPa) | 3.68 | 3.68 | 3.99 | 3.99 | 3.99 | 3.99 | 3.99 | 3.99 |
| | E82 (GPa) | 2.94 | 2.94 | 3.47 | 3.47 | 3.47 | 3.41 | 3.41 | 3.41 |
| Molding method of CFRP | Molding method | VaRI | VaRI | VaRI | VaRI | RTM | VaRI | VaRI | RTM |
| | Molding temperature (°C) | 180 | 180 | 180 | 180 | 180 | 180 | 180 | 180 |
| | Injection pressure (MPa) | 0.1 | 0.1 | 0.1 | 0.1 | 0.3 | 0.1 | 0.1 | 0.3 |
| | Mold pressure (MPa) | 0.1 | 0.1 | 0.1 | 0.1 | 1.5 | 0.1 | 0.1 | 1.5 |
| Result of molding of fiber-reinforced composite material | Vf (%) | 59.0 | 58.0 | 58.0 | 59.0 | 58.0 | 58.0 | 59.0 | 58.0 |
| | Impregnation time (min.) | 15.0 | 12.0 | 10.5 | 12.0 | 4.0 | 10.5 | 12.0 | 6.5 |
| | Surface quality | A | B | A | A | A | A | A | A |
| | CF interlayer thickness: Ti (μm) | 20 | 38 | 19 | 20 | 15 | 19 | 21 | 14 |
| | Ti/Df | 1.43 | 1.12 | 1.36 | 1.43 | 1.07 | 1.36 | 1.50 | 1.00 |
| Property of fiber-reinforced composite material | CAI strength (MPa) | 310 | 312 | 310 | 307 | 311 | 312 | 307 | 311 |
| | CAI damage area (mm²) | 400 | 460 | 370 | 350 | 310 | 360 | 370 | 313 |
| | Room temperature OHC strength (MPa) | 290 | 310 | 320 | 317 | 320 | 317 | 320 | 327 |
| | Wet heat OHC strength (MPa) | 270 | 285 | 304 | 305 | 310 | 310 | 315 | 310 |
| | Room temperature in-plane shear modulus (GPa) | 4.7 | 4.8 | 5.3 | 5.1 | 5.2 | 5.3 | 5.1 | 5.2 |
| | Wet heat in-plane shear modulus (GPa) | 3.7 | 3.8 | 4.5 | 4.4 | 4.5 | 4.4 | 4.3 | 4.4 |
| | Room temperature ILSS strength (MPa) | 105 | 107 | 119 | 115 | 114 | 119 | 115 | 115 |
| | Wet heat ILSS strength (MPa) | 90 | 92 | 105 | 104 | 105 | 105 | 102 | 103 |
| | Number of cracks after cold-hot cycle durability test (number) | 0 | 0 | 0 | 0 | 0 | 0 | 0 | 0 |

[Table 7]

| | | Comparative Example 2-1 | Comparative Example 2-2 | Comparative Example 2-3 | Comparative Example 2-4 | Comparative Example 2-5 | Comparative Example 2-6 |
|---|---|---|---|---|---|---|---|
| Constituent element [A]: reinforcing fiber base material | Kind of reinforcing fiber | T800G | T800G | T800G | T800G | T800G | T800G |
| | Form of reinforcing fiber base material | unidirectional sheet | unidirectional sheet | unidirectional sheet | unidirectional sheet | unidirectional sheet | unidirectional sheet |
| | Areal weight: Wb (g/m²) | 300 | 300 | 300 | 300 | 300 | 300 |
| | Kind of resin material constituting non-woven fabric | PA6/12 (20:80) | PA6/12 (80:20) | TR55 | TR90 | TR55 | TR90 |
| | Enthalpy of fusion of non-woven fabric (J/g) | 38.6 | 36.0 | 0 | 0 | 0 | 0 |
| Constituent element [B]: non-woven fabric | Load deflection temperature of resin material constituting non-woven fabric (°C) | 45 | 135 | 115 | 115 | 115 | 115 |
| | Areal weight: Wb (g/m²) | 6 | 5 | 6 | 6 | 6 | 6 |
| | Fiber diameter: Df (μm) | 14 | 40 | 14 | 34 | 14 | 14 |
| | Wb/Df | 0.43 | 0.13 | 0.43 | 0.18 | 0.43 | 0.43 |
| | Epoxy resin composition (mixture of constituent elements [C], [D] and other additives) | Composition 4 | Composition 4 | Composition 10 | Composition 11 | Composition 7 | Composition 9 |
| | Requirement (2): time reaching degree of cure of 20% at 180°C (Cd20(180°C)) (min.) | 31.0 | 31.0 | 14.0 | 3.0 | 47.5 | 6.7 |
| | Requirement (4): $R_{ref}$ = (B82/B25)/(E82/E25) | 0.45 | 0.69 | 1.10 | 1.07 | 1.20 | 0.95 |
| | B25 (Gpa) | 1.46 | 2.00 | 2.05 | 1.59 | 2.05 | 1.59 |
| | B82 (GPa) | 0.53 | 1.10 | 1.91 | 1.29 | 1.91 | 1.29 |
| | E25 (GPa) | 3.68 | 3.68 | 3.47 | 3.47 | 3.78 | 3.68 |
| | E82 (GPa) | 2.94 | 2.94 | 2.94 | 2.63 | 2.94 | 3.15 |
| Molding method of CFRP | Molding method | VaRI | VaRI | VaRI | VaRI | VaRI | VaRI |
| | Molding temperature (°C) | 180 | 180 | 180 | 180 | 180 | 180 |
| | Injection pressure (MPa) | 0.1 | 0.1 | 0.1 | 0.1 | 0.1 | 0.1 |
| | Mold pressure (MPa) | 0.1 | 0.1 | 0.1 | 0.1 | 0.1 | 0.1 |
| | Vf (%) | 58.0 | 57.0 | 57.0 | 54.0 | 58.0 | 57.0 |
| Result of molding of fiber-reinforced composite material | Impregnation time (min.) | 24.0 | 12.0 | 12.0 | 15.0 | 20.0 | 17.0 |
| | Surface quality | B | C | A | B | C | C |
| | CF interlayer thickness: Ti (μm) | 20 | 54 | 15 | 50 | 26 | 24 |
| | Ti/Df | 1.43 | 1.35 | 1.07 | 1.47 | 1.86 | 1.71 |
| Property of fiber-reinforced composite material | CAI strength (MPa) | 290 | 223 | 200 | 250 | 280 | 200 |
| | CAI damage area (mm²) | 750 | 810 | 850 | 900 | 500 | 910 |
| | Room temperature OHC strength (MPa) | 285 | 280 | 275 | 280 | 280 | 275 |
| | Wet heat OHC strength (MPa) | 215 | 210 | 230 | 230 | 210 | 215 |
| | Room temperature in-plane shear modulus (GPa) | 4.7 | 4.8 | 5.0 | 4.8 | 4.6 | 4.9 |
| | Wet heat in-plane shear modulus (GPa) | 3.0 | 3.1 | 4.0 | 3.2 | 3.0 | 3.3 |
| | Room temperature ILSS strength (MPa) | 95 | 100 | 95 | 94 | 93 | 95 |
| | Wet heat ILSS strength (MPa) | 60 | 62 | 65 | 58 | 55 | 65 |
| | Number of cracks after cold-hot cycle durability test (number) | 3 | 15 | 13 | 3 | 2 | 40 |

28

[Table 8]

| | | Example 3-0 | Example 3-1 | Example 3-2 | Example 3-3 | Example 3-4 | Example 3-5 | Example 3-6 | Example 3-7 | Example 3-8 | Example 3-9 |
|---|---|---|---|---|---|---|---|---|---|---|---|
| Constituent element [A]: reinforcing fiber base material | Kind of reinforcing fiber | T800G | T800G | T800G | T800G | T800G | T800G | T800G | T800G | T800G | T800G |
| | Form of reinforcing fiber base material | unidirectional sheet | unidirectional sheet | unidirectional sheet | unidirectional sheet | unidirectional sheet | unidirectional sheet | unidirectional sheet | unidirectional sheet | unidirectional sheet | unidirectional sheet |
| | Areal weight: Wb (g/m²) | 300 | 300 | 300 | 300 | 300 | 300 | 300 | 300 | 300 | 300 |
| Constituent element [B]: non-woven fabric | Kind of resin material constituting non-woven fabric | PA6I/12 | PA6I | PA6I/610 | TR55 | TR30 | TR55 | TR90 | TR90 | TR90 | TR90 |
| | Enthalpy of fusion of non-woven fabric (J/g) | 0 | 0 | 0 | 0 | 0 | 0 | 0 | 0 | 0 | 0 |
| | Load deflection temperature of resin material constituting non-woven fabric (°C) | 55 | 90 | 65 | 130 | 125 | 130 | 115 | 115 | 115 | 115 |
| | Areal weight: Wb (g/m²) | 5 | 5 | 5 | 5 | 5 | 5 | 6 | 6 | 6 | 6 |
| | Fiber diameter: Df (µm) | 40 | 40 | 40 | 40 | 15 | 40 | 14 | 34 | 14 | 34 |
| | Wb/Df | 0.13 | 0.13 | 0.13 | 0.13 | 0.33 | 0.13 | 0.43 | 0.18 | 0.43 | 0.18 |
| Epoxy resin composition (mixture of constituent elements [C], [D] and other additives) | | Composition 1 | Composition 1 | Composition 1 | Composition 1 | Composition 1 | Composition 1 | Composition 2 | Composition 2 | Composition 3 | Composition 3 |
| Requirement (2): time reaching degree of cure of 20% at 180°C (Cd20(180°C)) (min.) | | 21.0 | 21.0 | 21.0 | 21.0 | 21.0 | 21.0 | 15.7 | 15.7 | 23.3 | 23.3 |
| Requirement (5): σ190/σ160 | σ160 (MPa) | 0.52 | 0.51 | 0.48 | 0.52 | 0.48 | 0.52 | 0.54 | 0.54 | 0.54 | 0.54 |
| | σ190 (MPa) | 0.25 | 0.32 | 0.26 | 0.35 | 0.35 | 0.35 | 0.44 | 0.44 | 0.44 | 0.44 |
| | σ190/σ160 | 0.48 | 0.62 | 0.54 | 0.68 | 0.72 | 0.68 | 0.81 | 0.81 | 0.81 | 0.81 |
| Molding method of CFRP | Molding method | VaRI | VaRI | VaRI | VaRI | VaRI | RTM | VaRI | VaRI | VaRI | VaRI |
| | Molding temperature (°C) | 180 | 180 | 180 | 180 | 180 | 180 | 180 | 180 | 180 | 180 |
| | Injection pressure (MPa) | 0.1 | 0.1 | 0.1 | 0.1 | 0.1 | 0.3 | 0.1 | 0.1 | 0.1 | 0.1 |
| | Mold pressure (MPa) | 0.1 | 0.1 | 0.1 | 0.1 | 0.1 | 1.5 | 0.1 | 0.1 | 0.1 | 0.1 |
| Result of molding of fiber-reinforced composite material | Vf (%) | 59.5 | 59.0 | 59.0 | 58.0 | 58.0 | 58.0 | 59.0 | 58.0 | 59.0 | 58.0 |
| | Impregnation time (min.) | 21.0 | 18.0 | 15.0 | 18.0 | 9.0 | 5.0 | 15.0 | 12.0 | 12.0 | 9.0 |
| | Surface quality | B | B | B | A | A | B | A | B | A | B |
| | CF interlayer thickness: Ti (µm) | 22 | 22 | 21 | 60 | 42 | 39 | 19 | 45 | 20 | 40 |
| | Ti/Df | 0.55 | 0.55 | 0.53 | 1.50 | 2.80 | 0.98 | 1.36 | 1.32 | 1.43 | 1.18 |
| Property of fiber-reinforced composite material | CAI strength (MPa) | 265 | 260 | 270 | 285 | 270 | 287 | 270 | 275 | 295 | 300 |
| | CAI damage area (mm²) | 680 | 650 | 640 | 430 | 580 | 490 | 450 | 620 | 400 | 510 |
| | Room temperature OHC strength (MPa) | 285 | 285 | 282 | 290 | 295 | 305 | 289 | 292 | 300 | 320 |
| | Wet heat OHC strength (MPa) | 255 | 275 | 270 | 280 | 283 | 295 | 280 | 285 | 288 | 299 |
| | Room temperature ILSS strength (MPa) | 105 | 102 | 100 | 105 | 110 | 107 | 110 | 112 | 105 | 110 |
| | Wet heat ILSS strength (MPa) | 82 | 90 | 87 | 90 | 93 | 91 | 95 | 96 | 95 | 97 |
| | Number of cracks after cold-hot cycle durability test (number) | 3 | 1 | 2 | 1 | 0 | 0 | 0 | 0 | 0 | 0 |

29

[Table 9]

EP 4 663 689 A1

| | | Example 3-10 | Example 3-11 | Example 3-12 | Example 3-13 | Example 3-14 | Example 3-15 | Example 3-16 | Example 3-17 | Example 3-18 | Example 3-19 |
|---|---|---|---|---|---|---|---|---|---|---|---|
| Constituent element [A]: reinforcing fiber base material | Kind of reinforcing fiber | T800G | T800G | T800G | T800G | T800G | T1100G | T1100G | T1100G | T1100G | T1100G |
| | Form of reinforcing fiber base material | unidirectional sheet | unidirectional sheet | unidirectional sheet | unidirectional sheet | sateen weave | sateen weave | sateen weave | sateen weave | sateen weave | sateen weave |
| | Areal weight: Wb (g/m$^2$) | 300 | 300 | 150 | 150 | 290 | 290 | 290 | 290 | 290 | 290 |
| Constituent element [B]: non-woven fabric | Kind of resin material constituting non-woven fabric | TR90 | TR90 | TR90 | TR90 | TR90 | TR90 | TR90 | TR90 | TR90 | TR90 |
| | Enthalpy of fusion of non-woven fabric (J/g) | 0 | 0 | 0 | 0 | 0 | 0 | 0 | 0 | 0 | 0 |
| | Areal weight: Wb (g/m$^2$) | 6 | 6 | 6 | 6 | 6 | 6 | 6 | 12 | 6 | 12 |
| | Fiber diameter: Df (μm) | 14 | 34 | 34 | 34 | 34 | 34 | 34 | 34 | 34 | 34 |
| | Wb/Df | 0.43 | 0.18 | 0.18 | 0.18 | 0.18 | 0.18 | 0.18 | 0.35 | 0.18 | 0.35 |
| Epoxy resin composition (mixture of constituent elements [C], [D] and other additives) | | Composition 4 | Composition 4 | Composition 4 | Composition 4 | Composition 4 | Composition 4 | Composition 4 | Composition 4 | Composition 2 | Composition 2 |
| Requirement (2): time reaching degree of cure of 20% at 180°C (Cd20(180°C)) (min.) | | 31.0 | 31.0 | 31.0 | 31.0 | 31.0 | 31.0 | 31.0 | 31.0 | 15.7 | 15.7 |
| Requirement (5): σ190/σ160 | σ160 (MPa) | 0.54 | 0.54 | 0.52 | 0.52 | 0.07 | 0.07 | 0.07 | 0.07 | 0.07 | 0.07 |
| | σ190 (MPa) | 0.44 | 0.44 | 0.44 | 0.44 | 0.06 | 0.06 | 0.06 | 0.05 | 0.06 | 0.05 |
| | σ190/σ160 | 0.81 | 0.81 | 0.84 | 0.84 | 0.81 | 0.81 | 0.81 | 0.75 | 0.84 | 0.75 |
| Molding method of CFRP | Molding method | VaRI | VaRI | VaRI | RTM | VaRI | VaRI | RTM | RTM | RTM | RTM |
| | Molding temperature (°C) | 180 | 180 | 180 | 180 | 180 | 180 | 180 | 180 | 180 | 180 |
| | Injection pressure (MPa) | 0.1 | 0.1 | 0.1 | 0.3 | 0.1 | 0.1 | 0.3 | 0.3 | 0.3 | 0.3 |
| | Mold pressure (MPa) | 0.1 | 0.1 | 0.1 | 1.5 | 0.1 | 0.1 | 1.5 | 1.5 | 1.5 | 1.5 |
| Result of molding of fiber-reinforced composite material | Vf (%) | 59.0 | 58.0 | 58.0 | 58.0 | 58.0 | 58.0 | 58.0 | 58.0 | 58.0 | 58.0 |
| | Impregnation time (min.) | 15.0 | 12.0 | 15.0 | 5.0 | 13.5 | 13.5 | 5.0 | 6.5 | 5.0 | 6.5 |
| | Surface quality | A | A | A | A | A | A | A | A | A | A |
| | CF interlayer thickness: Ti (μm) | 20 | 38 | 36 | 40 | 42 | 40 | 36 | 45 | 32 | 40 |
| | Ti/Df | 1.43 | 1.12 | 1.06 | 1.18 | 1.24 | 1.18 | 1.06 | 1.32 | 0.94 | 1.18 |
| Property of fiber-reinforced composite material | CAI strength (MPa) | 310 | 312 | 315 | 318 | 288 | 309 | 310 | 312 | 280 | 284 |
| | CAI damage area (mm$^2$) | 400 | 460 | 380 | 385 | 620 | 600 | 578 | 520 | 530 | 490 |
| | Room temperature OHC strength (MPa) | 290 | 310 | 307 | 305 | 300 | 310 | 306 | 304 | 312 | 307 |
| | Wet heat OHC strength (MPa) | 270 | 285 | 275 | 278 | 281 | 285 | 280 | 272 | 290 | 282 |
| | Room temperature ILSS strength (MPa) | 105 | 107 | 100 | 104 | 100 | 105 | 103 | 102 | 110 | 112 |
| | Wet heat ILSS strength (MPa) | 90 | 92 | 91 | 92 | 91 | 93 | 93 | 88 | 93 | 90 |
| | Number of cracks after cold-hot cycle durability test (number) | 0 | 0 | 0 | 0 | 0 | 0 | 0 | 0 | 0 | 0 |

30

[Table 10]

| | | Comparative Example 3-1 | Comparative Example 3-2 | Comparative Example 3-3 | Comparative Example 3-4 | Comparative Example 3-5 | Comparative Example 3-6 |
|---|---|---|---|---|---|---|---|
| Constituent element [A]: reinforcing fiber base material | Kind of reinforcing fiber | T800G | T800G | T800G | T800G | T800G | T800G |
| | Form of reinforcing fiber base material | unidirectional sheet | unidirectional sheet | unidirectional sheet | unidirectional sheet | unidirectional sheet | unidirectional sheet |
| | Areal weight: Wb (g/m²) | 300 | 300 | 300 | 300 | 300 | 300 |
| Constituent element [B]: non-woven fabric | Kind of resin material constituting non-woven fabric | PA1206 | PA1209 | TR55 | TR90 | TR55 | TR90 |
| | Enthalpy of fusion of non-woven fabric (J/g) | 38.6 | 38.5 | 0 | 0 | 0 | 0 |
| | Load deflection temperature of resin material constituting non-woven fabric (°C) | 45 | 135 | 115 | 115 | 115 | 115 |
| | Areal weight: Wb (g/m²) | 6 | 5 | 6 | 6 | 6 | 6 |
| | Fiber diameter: Df (μm) | 14 | 40 | 14 | 34 | 14 | 14 |
| | Wb/Df | 0.43 | 0.13 | 0.43 | 0.18 | 0.43 | 0.43 |
| Epoxy resin composition (mixture of constituent elements [C], [D] and other additives) | | Composition 4 | Composition 4 | Composition 10 | Composition 11 | Composition 7 | Composition 9 |
| Requirement (2): time reaching degree of cure of 20% at 180°C (Cd20(180°C)) (min.) | | 31.0 | 31.0 | 14.0 | 3.0 | 47.5 | 6.7 |
| Requirement (5): σ190/σ160 | σ160 (MPa) | 0.40 | 0.58 | 0.52 | 0.54 | 0.52 | 0.54 |
| | σ190 (MPa) | 0.12 | 0.27 | 0.35 | 0.44 | 0.35 | 0.44 |
| | σ190/σ160 | 0.30 | 0.47 | 0.68 | 0.81 | 0.68 | 0.81 |
| Molding method of CFRP | Molding method | VaRI | VaRI | VaRI | VaRI | VaRI | VaRI |
| | Molding temperature (°C) | 180 | 180 | 180 | 180 | 180 | 180 |
| | Injection pressure (MPa) | 0.1 | 0.1 | 0.1 | 0.1 | 0.1 | 0.1 |
| | Mold pressure (MPa) | 0.1 | 0.1 | 0.1 | 0.1 | 0.1 | 0.1 |
| Result of molding of fiber-reinforced composite material | Vf (%) | 58.0 | 57.0 | 57.0 | 54.0 | 58.0 | 57.0 |
| | Impregnation time (min.) | 24.0 | 12.0 | 12.0 | 15.0 | 20.0 | 17.0 |
| | Surface quality | B | C | A | B | C | C |
| | CF interlayer thickness: Ti (μm) | 20 | 54 | 15 | 50 | 26 | 24 |
| | Ti/Df | 1.43 | 1.35 | 1.07 | 1.47 | 1.86 | 1.71 |
| Property of fiber-reinforced composite material | CAI strength (MPa) | 290 | 223 | 200 | 250 | 280 | 200 |
| | CAI damage area (mm²) | 750 | 810 | 850 | 900 | 500 | 910 |
| | Room temperature OHC strength (MPa) | 285 | 280 | 275 | 280 | 280 | 275 |
| | Wet heat OHC strength (MPa) | 215 | 210 | 230 | 230 | 210 | 215 |
| | Room temperature ILSS strength (MPa) | 95 | 100 | 95 | 94 | 93 | 95 |
| | Wet heat ILSS strength (MPa) | 60 | 62 | 65 | 58 | 55 | 65 |
| | Number of cracks after cold-hot cycle durability test (number) | 3 | 15 | 13 | 3 | 2 | 40 |

Where, the units of respective components in the Tables are parts by mass.

Industrial Applicability

The fiber-reinforced composite material molding material of the present invention is excellent in impregnation property in resin injection molding, and the fiber-reinforced composite material obtained by heat curing has high levels of compressive strength under wet heat environments, impact resistance, and crack resistance after cold-hot cycles, and can therefore be suitably used for aircraft components, particularly large primary structural components.

Specifically, it can be preferably used for many structural materials such as aircraft components such as fuselages, main wings, tails, movable surfaces, fairings, cowls, doors, seats, and interior materials, spacecraft components such as motor cases and main wings, satellite components such as structures and antennas, automobile components such as outer panels, chassis, aerodynamic components, and seats, railway vehicle components such as structures and seats, and ship components such as hulls and seats. In particular, since the molding material for a fiber-reinforced composite material of the present invention exhibits high levels of impact resistance and compressive strength under wet heat environments, exhibits crack resistance against cold-hot cycles, and also exhibits good impregnation property in resin injection molding, it can be suitably used for aircraft components, particularly large primary structural components.

**Claims**

1. A molding material for a fiber-reinforced composite material, wherein an epoxy resin composition comprising a constituent element [C] and a constituent element [D] is impregnated into a layered body incorporated with a constituent element [B] between arbitrary layers among a plurality of layers of constituent elements [A], and the molding material satisfies the following requirements 1 and 2 at the same time:
   [A]: reinforcing fiber base material; [B]: non-woven fabric; [C]: epoxy resin main ingredient; and [D]: amine compound.

   requirement 1: the constituent element [B] comprises an amorphous resin material; and
   requirement 2: a time $Cd_{20}(180°C)$ in which the degree of cure of the epoxy resin composition comprising the constituent elements [C] and [D] reaches 20% at 180°C is 15 minutes to 45 minutes.

2. The molding material for a fiber-reinforced composite material according to claim 1, wherein the molding material satisfies the following requirement 3:
   requirement 3: (i) a ratio of a fiber diameter of the constituent element [B] in a resin-cured plate obtained by impregnating the constituent element [B] with the epoxy resin composition and heat-curing it at 190°C to a fiber diameter before the heat-curing is referred to as Rexp(190°C), and (ii) a ratio of a fiber diameter of the constituent element [B] in a resin-cured plate obtained by impregnating the constituent element [B] into the epoxy resin composition and heat-curing it at 170°C to a fiber diameter before the heat-curing is referred to as Rexp(170°C), and Rexp(190°C) and Rexp(170°C) satisfy the following equation (1):

$$0.5<(Rexp(190°C)\text{-}Rexp(170°C))\times5<5.0 \cdots (1)$$

3. The molding material for a fiber-reinforced composite material according to claim 1, wherein the molding material satisfies the following requirement 4:
   requirement 4: (i) a tensile modulus B82 (humidity controlled at 82°C) and a tensile modulus B25 (humidity controlled at 25°C) of the constituent element [B], and (ii) a tensile modulus E82 (humidity controlled at 82°C) and a tensile modulus E25 (25°C, 50% RH) of an epoxy resin cured plate obtained by heat curing the epoxy resin composition comprising the constituent elements [C] and [D] at 180°C satisfy the following equation (2):

$$0.7< R_{ret} = (B82/B25)/(E82/E25)<1.2 \cdots (2)$$

4. The molding material for a fiber-reinforced composite material according to claim 1, wherein the molding material satisfies the following requirement 5:
   requirement 5: when the layered body is compressed in an out-of-plane direction, a compressive stress at 160°C ($\sigma160$: MPa) and a compressive stress at 190°C ($\sigma190$: MPa) satisfy the following equation (3):

$$0.5<(\sigma190/\sigma160)<1.0 \cdots (3)$$

5. The molding material for a fiber-reinforced composite material according to any one of claims 1 to 4, wherein the amorphous resin material constituting the constituent element [B] is an amorphous polyamide.

6. The molding material for a fiber-reinforced composite material according to any one of claims 1 to 4, wherein a load deflection temperature of the amorphous resin material constituting the constituent element [B] is in a range of 100°C to 160°C.

7. The molding material for a fiber-reinforced composite material according to any one of claims 1 to 4, wherein a value determined by dividing a weight per area (Wb) of the constituent element [B] with a number average fiber diameter (Df) of the constituent element [B] (Wb/Df) is in a range of 0.15 to 0.60.

8. A fiber-reinforced composite material obtained by heat curing the molding material for a fiber-reinforced composite material according to any one of claims 1 to 4.

9. The fiber-reinforced composite material according to claim 8, wherein, in a fiber-reinforced composite material obtained by heat curing the molding material for a fiber-reinforced composite material according to any one of claims 1 to 4 at 180°C for 2 hours, a value (Ti/Df) determined by dividing an interlayer thickness (Ti) of reinforcing fibers by a number average fiber diameter (Df) of the constituent element [B] is in a range of 0.7 to 1.5.

## INTERNATIONAL SEARCH REPORT

| International application No. |
|---|
| **PCT/JP2024/002229** |

### A. CLASSIFICATION OF SUBJECT MATTER

*C08J 5/04*(2006.01)i
FI: C08J5/04

According to International Patent Classification (IPC) or to both national classification and IPC

### B. FIELDS SEARCHED

Minimum documentation searched (classification system followed by classification symbols)

C08J5/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-23691 A (TORAY INDUSTRIES, INC.) 13 February 2020 (2020-02-13) claims, paragraphs [0016]-[0020], [0029]-[0043], examples | 1-5, 7-9 |
| Y | | 6 |
| Y | WO 2019/208242 A1 (TORAY INDUSTRIES, INC.) 31 October 2019 (2019-10-31) claims, paragraphs [0096]-[0101], examples | 6 |
| A | JP 2003-19763 A (TORAY INDUSTRIES, INC.) 21 January 2003 (2003-01-21) entire text | 1-9 |
| A | JP 2019-99987 A (TORAY INDUSTRIES, INC.) 24 June 2019 (2019-06-24) entire text | 1-9 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 April 2024** | **16 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/002229**

| Patent document cited in search report | | | Publication date (day/month/year) | Patent family member(s) | Publication date (day/month/year) |
|---|---|---|---|---|---|
| JP | 2020-23691 | A | 13 February 2020 | (Family: none) | |
| WO | 2019/208242 | A1 | 31 October 2019 | US 2021/0115208 A1 claims, paragraphs [0112]-[0117], examples | |
| JP | 2003-19763 | A | 21 January 2003 | (Family: none) | |
| JP | 2019-99987 | A | 24 June 2019 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022149591 A
- JP 2020023182 A
- JP 2003080607 A
- JP 2019099987 A
- WO 2010046609 A